# EUROPEAN PATENT APPLICATION

(11) **EP 4 387 365 A1**
(43) Date of publication of application: **19.06.2024**
(21) Application number: 22860328.8
(22) Date of filing: 16.08.2022
(51) Int. Cl.: H04W 72/54

(54) **COMMUNICATION METHOD AND APPARATUS**

(30) Priority: 26.08.2021 CN 202110990866
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN)
(74) Representative: Huawei European IPR
(86) International application number: PCT/CN2022/112879
(87) International publication number: WO 2023/024982

(57) **Abstract**

This application provides a communication method and an apparatus, to improve uplink transmission efficiency and performance. The method includes: A first terminal apparatus receives first configuration information from a network device, where the first configuration information indicates an identifier of a second terminal apparatus and information about a first frequency band, and the first frequency band is a frequency band supported by the second terminal apparatus; and the first terminal apparatus transmits uplink data to the network device on the first frequency band and a second frequency band that is supported by the first terminal apparatus.

## Description

### CROSS-REFERENCE TO RELATED APPLICATIONS

This application claims priority to Chinese Patent Application No. 202110990866.1, filed with the China National Intellectual Property Administration on August 26, 2021 and entitled "COMMUNICATION METHOD AND APPARATUS", which is incorporated herein by reference in its entirety.

### TECHNICAL FIELD

This application relates to the field of mobile communication technologies, and in particular, to a communication method and an apparatus.

### BACKGROUND

From the perspective of communication theory, performance of a single link in a current communication network is close to the Shannon limit, and there is limited room for improvement. Cooperation between a plurality of links can further improve a network capacity, that is, base stations or users can help each other, to obtain transmission resources besides singlelink transmission, and improve transmission performance. A communication technology of cooperation between users is referred to as a user cooperation technology.

In the current user cooperation technology, a base station may not sense users that cooperate with each other, but only identify a user that needs to send data. For example, in some user cooperation solutions, a user (referred to as a service user) that sends uplink service data may perform uplink transmission on an operating frequency band (referred to as a target frequency band) of another user (referred to as a cooperation user). The base station does not need to sense the cooperation user, in other words, the base station considers the target frequency band as an operating frequency band of the service user. In this case, the base station only needs to schedule the service user to perform transmission on the target frequency band, the service user may send data to the cooperation user based on the scheduling, and the cooperation user sends the data to the base station on the target frequency band.

Because the cooperation user is not sensed, the base station may simultaneously schedule the service user to perform uplink transmission and schedule the cooperation user to perform uplink transmission. In addition, the uplink transmission of the service user needs to be implemented with the cooperation user. In this case, a conflict occurs in the uplink transmission of the cooperation user, and uplink transmission performance is reduced.

### SUMMARY

This application provides a communication method and an apparatus, to improve uplink transmission performance in user cooperation.

According to a first aspect, an embodiment of this application provides a communication method. The method is performed by a first terminal apparatus. The first terminal apparatus includes a service UE (service UE, SUE) or a component in the SUE. The SUE may be a UE that sends data, and the SUE may send data to a network device with assistance of a cooperation UE (cooperation UE, CUE).

The method includes: The first terminal apparatus receives first configuration information from the network device, where the first configuration information indicates an identifier of a second terminal apparatus and information about a first frequency band, and the first frequency band is a frequency band supported by the second terminal apparatus; and the first terminal apparatus transmits uplink data to the network device on the first frequency band and a second frequency band that is supported by the first terminal apparatus.

Based on the foregoing method, the network device may indicate, to the first terminal apparatus, the first frequency band on which the second terminal apparatus operates. Therefore, the base station can sense that the first frequency band is an operating frequency band of the second terminal apparatus, and indicate that the first frequency band is for assisting the first terminal apparatus in data transmission. Therefore, when scheduling the second terminal apparatus, the base station may schedule, on different time-frequency resources, the first frequency band to perform data cooperation for the first terminal apparatus and to send data of the second terminal apparatus, to avoid a conflict between transmission of the first terminal apparatus and the second terminal apparatus, and improve uplink transmission efficiency and performance.

In a possible design, the first terminal apparatus may further send the identifier of the second terminal apparatus, information about a frequency band combination supported by the first terminal apparatus, and/or the information about the first frequency band to the network device.

In a possible design, the first terminal apparatus may further send delay information between the first terminal apparatus and the second terminal apparatus to the network device. The delay information may be for determining first scheduling information and second scheduling information, to indicate a moment/time domain resource at/on which the first terminal apparatus sends first data to the second terminal apparatus and a moment/time domain resource at/on which the second terminal apparatus performs cooperative transmission on the first frequency band. Proper time domain resource assignment is performed based on the delay information, so that the cooperation data can be sent to the base station as soon as possible.

In a possible design, the first terminal apparatus may further send first information to the network device, where the first information includes at least one of the following: information about a frequency band combination supported by the first terminal apparatus, the identifier of the second terminal apparatus and information about a frequency band supported by the second terminal apparatus, an identifier of a third terminal apparatus and information about a frequency band supported by the third terminal apparatus, delay information between the first terminal apparatus and the second terminal apparatus, or delay information between the first terminal apparatus and the third terminal apparatus, where the frequency band supported by the second terminal apparatus includes the first frequency band. The first information may be used by the network device to determine the second terminal apparatus and the first frequency band.

In a possible design, the first terminal apparatus may further receive the identifier of the second terminal apparatus and/or the information about the frequency band supported by the second terminal apparatus from the second terminal apparatus, where the frequency band supported by the second terminal apparatus includes the first frequency band.

In a possible design, the first terminal apparatus may further receive the first scheduling information from the network device, where the first scheduling information indicates the first terminal apparatus to send first data to the second terminal apparatus, and the first terminal apparatus may send the first data to the second terminal apparatus, where the first data is to be sent to the network device on the first frequency band. In this application, that the first data is sent to the network device on the first frequency band may mean that the first data or some data in the first data is sent to the network device on the first frequency band.

In a possible design, the first scheduling information includes the identifier of the second terminal apparatus and/or an identifier of the first frequency band.

In a possible design, the first data includes information for identifying the first data. The information for identifying the first data is, for example, HARQ information.

In a possible design, the information for identifying the first data corresponds to second scheduling information, the second scheduling information indicates the second terminal apparatus to send second data to the network device on the first frequency band, and the second data is determined based on the first data. Therefore, the second terminal apparatus may determine, based on the information for identifying the first data, to transmit the second data by using a resource indicated by the second scheduling information, to improve transmission performance.

In a possible design, the first scheduling information and the second scheduling information both include the information for identifying the first data.

In a possible design, the first configuration information includes the identifier of the second terminal apparatus and/or the identifier of the first frequency band. According to this design, when the first configuration information and the first scheduling information carry the identifier of the second terminal apparatus and/or the identifier of the first frequency band, the first terminal apparatus can determine, based on the identifier of the second terminal apparatus and/or the identifier of the first frequency band, to send the first data to the second terminal apparatus, but does not send the data to another terminal apparatus.

According to a second aspect, an embodiment of this application provides a communication method. The method is performed by a second terminal apparatus. The second terminal apparatus includes a CUE or a component in the CUE.

The method includes: The second terminal apparatus receives second configuration information from a network device, where the second configuration information is for configuring a first frequency band supported by the second terminal apparatus; and the second terminal apparatus performs uplink data transmission on the first frequency band and a second frequency band that is supported by a first terminal apparatus, to send data of the first terminal apparatus to the network device.

In a possible design, the second terminal apparatus may further send an identifier of the second terminal apparatus and/or information about a frequency band supported by the second terminal apparatus to the first terminal apparatus, where the frequency band supported by the second terminal apparatus includes the first frequency band.

In a possible design, the second terminal apparatus may further receive second scheduling information from the network device, where the second scheduling information indicates the second terminal apparatus to send second data to the network device on the first frequency band, the second data is determined based on first data, and the first data is sent by the first terminal apparatus to the second terminal apparatus; and the second terminal apparatus may send the second data to the network device on the first frequency band.

In a possible design, the first data includes information for identifying the first data.

In a possible design, the information for identifying the first data corresponds to the second scheduling information.

In a possible design, first scheduling information and the second scheduling information both include the information for identifying the first data.

In a possible design, the second terminal apparatus sends third data on the first frequency band, where the third data is data of the second terminal apparatus, and a time domain resource of the third data is different from a time domain resource of the second data.

For beneficial effects of the method shown in the second aspect and the possible designs of the method, refer to descriptions of beneficial effects of the corresponding method or designs in the first aspect.

According to a third aspect, an embodiment of this application provides a communication method. The method is performed by a network device. The method includes: The network device sends first configuration information to a first terminal apparatus, where the first configuration information indicates an identifier of a second terminal apparatus and information about a first frequency band, and the first frequency band is a frequency band supported by the second terminal apparatus; the network device sends second configuration information to the second terminal apparatus, where the second configuration information is for configuring the first frequency band supported by the second terminal apparatus; and the network device receives, from the first terminal apparatus, data sent in uplink data transmission performed on the first frequency band supported by the second terminal device and a second frequency band supported by the first terminal apparatus.

In a possible design, the network device may further receive the identifier of the second terminal apparatus, information about a frequency band combination supported by the first terminal apparatus, and/or the information about the first frequency band from the first terminal apparatus.

In a possible design, the network device may further receive delay information between the first terminal apparatus and the second terminal apparatus from the first terminal apparatus.

In a possible design, the network device may further receive first information from the first terminal apparatus; and determine, based on the first information, that the first terminal apparatus transmits uplink data to the network device on the first frequency band and the second frequency band. The first information includes at least one of the following: information about a frequency band combination supported by the first terminal apparatus, the identifier of the second terminal apparatus and information about a frequency band supported by the second terminal apparatus, an identifier of a third terminal apparatus and information about a frequency band supported by the third terminal apparatus, delay information between the first terminal apparatus and the second terminal apparatus, or delay information between the first terminal apparatus and the third terminal apparatus, where the frequency band supported by the second terminal apparatus includes the first frequency band.

In a possible design, the network device may further send first scheduling information to the first terminal apparatus, where the first scheduling information indicates the first terminal apparatus to send first data to the second terminal apparatus. The network device may further send second scheduling information to the second terminal apparatus, where the second scheduling information indicates the second terminal apparatus to send second data to the network device on the first frequency band, the second data is determined based on the first data, and the first data is sent by the first terminal apparatus to the second terminal apparatus. The network device may receive the second data from the second terminal apparatus.

In a possible design, the first scheduling information includes the identifier of the second terminal apparatus and/or an identifier of the first frequency band.

In a possible design, the network device may further receive third data sent by the second terminal apparatus on the first frequency band, where the third data is data of the second terminal apparatus, and a time domain resource of the third data is different from a time domain resource of the second data.

In a possible design, the first scheduling information and the second scheduling information both include information for identifying the first data.

In a possible design, the first configuration information may include the identifier of the second terminal apparatus and/or the identifier of the first frequency band.

According to a fourth aspect, an embodiment of this application provides a communication apparatus. The communication apparatus may implement the method implemented by the first terminal apparatus in the first aspect or any possible design of the first aspect. The apparatus includes a corresponding unit or component configured to perform the foregoing method. The unit included in the apparatus may be implemented in a software and/or hardware manner. The apparatus may be, for example, the first terminal apparatus, or a chip, a chip system, a vehicle-mounted communication module, or a processor that can support the first terminal apparatus in implementing the foregoing method.

For example, the communication apparatus may include modular components such as a transceiver unit (or referred to as a communication module or a transceiver module) and a processing unit (or referred to as a processing module). These modules may perform corresponding functions of the first terminal apparatus in the first aspect or any possible design of the first aspect. When the communication apparatus is the first terminal apparatus, the transceiver unit may be a sending unit when performing a sending step, and the transceiver unit may be a receiving unit when performing a receiving step. The transceiver unit may be replaced by a transceiver, the sending unit may be replaced by a transmitter, and the receiving unit may be replaced by a receiver. The transceiver unit may include an antenna, a radio frequency circuit, and the like. The processing unit may be a processor, for example, a baseband chip. When the communication apparatus is a component that has the functions of the first terminal apparatus, the transceiver unit may be a radio frequency unit, and the processing unit may be a processor. When the communication apparatus is a chip system, the transceiver unit may be an input/output interface of the chip system, and the processing unit may be a processor of the chip system, for example, a central processing unit (central processing unit, CPU).

The transceiver unit may be configured to perform a receiving and/or sending action performed by the first terminal apparatus in the first aspect or any possible design of the first aspect. The processing unit may be configured to perform an action other than receiving and sending performed by the first terminal apparatus in the first aspect or any possible design of the first aspect.

Optionally, the communication apparatus may include a transceiver module and/or a communication module.

Optionally, the communication apparatus may include a processor and/or a transceiver. The communication apparatus may further include a memory.

According to a fifth aspect, an embodiment of this application provides a communication apparatus. The communication apparatus may implement the method implemented by the second terminal apparatus in the second aspect or any possible design of the second aspect. The apparatus includes a corresponding unit or component configured to perform the foregoing method. The unit included in the apparatus may be implemented in a software and/or hardware manner. The apparatus may be, for example, the second terminal apparatus, or a chip, a chip system, a vehicle-mounted communication module, or a processor that can support the second terminal apparatus in implementing the foregoing method.

For example, the communication apparatus may include modular components such as a transceiver unit (or referred to as a communication module or a transceiver module) and a processing unit (or referred to as a processing module). These modules may perform corresponding functions of the second terminal apparatus in the second aspect or any possible design of the second aspect. When the communication apparatus is the second terminal apparatus, the transceiver unit may be a sending unit when performing a sending step, and the transceiver unit may be a receiving unit when performing a receiving step. The transceiver unit may be replaced by a transceiver, the sending unit may be replaced by a transmitter, and the receiving unit may be replaced by a receiver. The transceiver unit may include an antenna, a radio frequency circuit, and the like. The processing unit may be a processor, for example, a baseband chip. When the communication apparatus is a component that has the functions of the second terminal apparatus, the transceiver unit may be a radio frequency unit, and the processing unit may be a processor. When the communication apparatus is a chip system, the transceiver unit may be an input/output interface of the chip system, and the processing unit may be a processor of the chip system, for example, a CPU.

The transceiver unit may be configured to perform a receiving and/or sending action performed by the second terminal apparatus in the second aspect or any possible design of the second aspect. The processing unit may be configured to perform an action other than receiving and sending performed by the second terminal apparatus in the second aspect or any possible design of the second aspect.

Optionally, the communication apparatus may include a transceiver module and/or a communication module.

Optionally, the communication apparatus may include a processor and/or a transceiver. The communication apparatus may further include a memory.

According to a sixth aspect, an embodiment of this application provides a communication apparatus. The communication apparatus may implement the method implemented by the network device in the third aspect or any possible design of the third aspect. The apparatus includes a corresponding unit or component configured to perform the foregoing method. The unit included in the apparatus may be implemented in a software and/or hardware manner. The apparatus may be, for example, the network device, or a chip, a chip system, a vehicle-mounted communication module, or a processor that can support the network device in implementing the foregoing method.

For example, the communication apparatus may include modular components such as a transceiver unit (or referred to as a communication module or a transceiver module) and a processing unit (or referred to as a processing module). These modules may perform corresponding functions of the network device in the third aspect or any possible design of the third aspect. When the communication apparatus is the network device, the transceiver unit may be a sending unit when performing a sending step, and the transceiver unit may be a receiving unit when performing a receiving step. The transceiver unit may be replaced by a transceiver, the sending unit may be replaced by a transmitter, and the receiving unit may be replaced by a receiver. The transceiver unit may include an antenna, a radio frequency circuit, and the like. The processing unit may be a processor, for example, a baseband chip. When the communication apparatus is a component that has the functions of the network device, the transceiver unit may be a radio frequency unit, and the processing unit may be a processor. When the communication apparatus is a chip system, the transceiver unit may be an input/output interface of the chip system, and the processing unit may be a processor of the chip system, for example, a CPU.

The transceiver unit may be configured to perform a receiving and/or sending action performed by the network device in the third aspect or any possible design of the third aspect. The processing unit may be configured to perform an action other than receiving and sending performed by the network device in the third aspect or any possible design of the third aspect.

Optionally, the communication apparatus may include a transceiver module and/or a communication module.

Optionally, the communication apparatus may include a processor and/or a transceiver. The communication apparatus may further include a memory.

According to a seventh aspect, an embodiment of this application provides a communication system. The communication system includes the communication apparatuses according to the third aspect, the fourth aspect, and the fifth aspect.

According to an eighth aspect, an embodiment of this application provides a computer-readable storage medium. The computer-readable storage medium is configured to store computer instructions or a program. When the computer instructions or the program is run on a computer, the computer is enabled to perform the method according to any one of the first aspect to the third aspect or the possible implementations of the first aspect to the third aspect.

According to a ninth aspect, an embodiment of this application provides a computer program product. When the computer program product runs on a computer, the computer is enabled to perform the method according to any one of the first aspect to the third aspect or the possible designs of the first aspect to the third aspect.

According to a tenth aspect, an embodiment of this application provides a circuit. The circuit is coupled to a memory, and the circuit is configured to perform the method according to any one of the first aspect to the third aspect or the possible implementations of the first aspect to the third aspect. The circuit may include a chip circuit, a chip, a chip system, or the like.

For beneficial effects of the second aspect to the tenth aspect and the possible designs of the second aspect to the tenth aspect, refer to beneficial effects of the first aspect and the possible designs of the first aspect.

### BRIEF DESCRIPTION OF DRAWINGS

FIG. 1 is a schematic diagram of an architecture of a wireless communication system according to this application;
FIG. 2(a) is a schematic diagram of an architecture of another wireless communication system according to this application;
FIG. 2(b) is a schematic diagram of an architecture of another wireless communication system according to this application;
FIG. 2(c) is a schematic diagram of an architecture of another wireless communication system according to this application;
FIG. 2(d) is a schematic diagram of an architecture of another wireless communication system according to this application;
FIG. 3 is a schematic diagram of an architecture of another wireless communication system according to this application;
FIG. 4 is a schematic diagram of a carrier aggregation principle according to this application;
FIG. 5 is a schematic diagram of another carrier aggregation principle according to this application;
FIG. 6 is a schematic flowchart of UE capability information reporting according to this application;
FIG. 7 is a schematic diagram of an architecture of another wireless communication system according to this application;
FIG. 8 is a schematic diagram of a structure of a communication apparatus according to this application;
FIG. 9 is a schematic diagram of a structure of another communication apparatus according to this application;
FIG. 10 is a schematic flowchart of a communication method according to this application;
FIG. 11(a) to FIG. 11(c) are schematic flowcharts of another communication method according to this application;
FIG. 12 is a schematic flowchart of another communication method according to this application;
FIG. 13 is a schematic diagram of a structure of a bitmap according to this application; and
FIG. 14 is a schematic flowchart of another communication method according to an embodiment of this application.

### DESCRIPTION OF EMBODIMENTS

The following describes technical solutions in embodiments of this application with reference to the accompanying drawings in embodiments of this application.

To clearly describe the technical solutions in embodiments of this application, terms such as "first" and "second" are used in embodiments of this application to distinguish between same items or similar items that have basically same functions or purposes. For example, first information and second information are merely used to distinguish between different information, and do not limit a sequence of the first information and the second information. A person skilled in the art may understand that the terms such as "first" and "second" do not limit a quantity or an execution sequence, and the terms such as "first" and "second" do not indicate a definite difference.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c, where a, b, and c each may be singular or plural.

For ease of understanding the data transmission method provided in embodiments of this application, the following describes a system architecture and an application scenario of the data transmission method provided in embodiments of this application. It may be understood that the system architecture and the application scenario described in embodiments of this application are intended to describe the technical solutions in embodiments of this application more clearly, and do not constitute any limitation on the technical solutions provided in embodiments of this application.

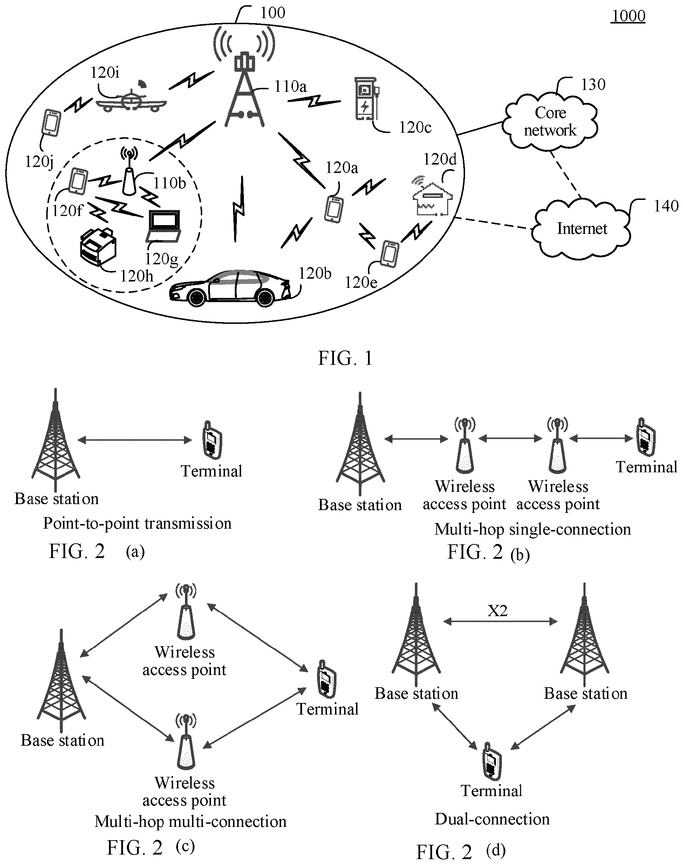

FIG. 1 is a schematic diagram of an architecture of a communication system 1000 to which an embodiment of this application is applied. As shown in FIG. 1, the communication system includes a radio access network 100 and a core network 130. Optionally, the communication system 1000 may further include the Internet 140. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be different physical devices independent of each other, or functions of the core network device and logical functions of the radio access network device may be integrated into a same physical device, or some functions of the core network device and some functions of the radio access network device may be integrated into one physical device. A wired or wireless manner may be used for connection between terminals and between radio access network devices. FIG. 1 is only a schematic diagram. The communication system may further include other network devices, for example, may further include a wireless relay device and a wireless backhaul device. This is not shown in FIG. 1.

The radio access network device may be a device that has a wireless transceiver function. The radio access network device may be a device that provides a wireless communication function service, is usually located on a network side, and includes but is not limited to: a next generation NodeB (gNodeB, gNB) in a 5th generation (5th generation, 5G) communication system, a next generation NodeB in a 6th generation (6th generation, 6G) mobile communication system, a base station in a future mobile communication system, an access node in a Wi-Fi system, an evolved NodeB (evolved NodeB, eNB) in an LTE system, a radio network controller (radio network controller, RNC), a NodeB (NodeB, NB), a base station controller (base station controller, BSC), a home NodeB (for example, a home evolved NodeB, or a home NodeB, HNB), a baseband unit (baseband unit, BBU), a transmission reception point (transmission reception point, TRP), a transmission point (transmission point, TP), a base transceiver station (base transceiver station, BTS), and the like.

In a network structure, the access network device may include a central unit (central unit, CU) node, a distributed unit (distributed unit, DU) node, a RAN device including a CU node and a DU node, or a RAN device including a CU-control plane node, a CU-user plane node, and a DU node. The access network device may serve a cell. User equipment communicates with a base station on a transmission resource (for example, a frequency domain resource, or in other words, a frequency spectrum resource) used for the cell. The cell may be a cell corresponding to the base station (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-speed data transmission service. The radio access network device may be a macro base station (for example, 110a in FIG. 1), may be a micro base station or an indoor base station (for example, 110b in FIG. 1), or may be a relay node or a donor node, a device that provides a wireless communication service for user equipment in a V2X communication system, a radio controller in a cloud radio access network (cloud radio access network, CRAN) scenario, a relay station, a vehicle-mounted device, a wearable device, a network device in a future evolved network, or the like. A specific technology and a specific device form that are used by the radio access network device are not limited in embodiments of this application. For ease of description, the following provides descriptions by using an example in which the radio access network device is a base station.

The terminal may alternatively be referred to as a terminal device, a user equipment (user equipment, UE), a mobile station (mobile station, MS), a mobile terminal (mobile terminal, MT), or the like, and may be a user-side entity, for example, a mobile phone, configured to receive or transmit a signal. The terminal device may be a user equipment (user equipment, UE). The UE includes a handheld device, a vehicle-mounted device, a wearable device, or a computing device that has a wireless communication function. For example, the UE may be a mobile phone (mobile phone), a tablet computer, or a computer that has a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, telemedicine, smart grid, smart furniture, smart office, smart wearable, smart transportation, and smart city. The terminal may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. In embodiments of this application, an apparatus configured to implement the function of the terminal may be a terminal, or may be an apparatus, for example, a chip system, a communication module, or a modem, that can support the terminal in implementing the function. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is a terminal and the terminal is a UE. A specific technology and a specific device form that are used by the terminal device are not limited in embodiments of this application.

Optionally, the UE may alternatively be used as a base station. For example, the UE may be used as a scheduling entity that provides sidelink signals between UEs in vehicle-to-everything (V2X), device-to-device (D2D), peer-to-peer (P2P), or the like.

The base station and the terminal may be located at fixed positions, or may be mobile. The base station and the terminal may be deployed on land, including an indoor or outdoor scenario, and a handheld or a vehicle-mounted scenario; or may be deployed on water; or may be deployed on an aircraft, a balloon, or an artificial satellite in the air. Application scenarios of the base station and the terminal are not limited in embodiments of this application.

Roles of the base station and the terminal may be relative. For example, a helicopter or an unmanned aerial vehicle 120i in FIG. 1 may be configured as a mobile base station. For the terminal 120j that accesses the radio access network 100 via 120i, the terminal 120i is a base station. However, for the base station 110a, 120i is a terminal. To be specific, 110a and 120i communicate with each other by using a wireless air interface protocol. It is clear that, 110a and 120i may alternatively communicate with each other by using an interface protocol between base stations. In this case, for 110a, 120i is also a base station. Therefore, the base station and the terminal may be collectively referred to as communication apparatuses. 110a, 110b, and 120a to 120j in FIG. 1 may be referred to as communication apparatuses having respective corresponding functions, for example, a communication apparatus having a base station function and a communication apparatus having a terminal function.

Communication between the base station and the terminal, between base stations, and between terminals may be performed by using a licensed spectrum, an unlicensed spectrum, or both the licensed spectrum and the unlicensed spectrum; and may be performed by using a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station may be a control center in an application scenario of the foregoing terminal, such as smart grid, industrial control, smart transportation, or smart city. The function of the terminal may alternatively be performed by a module (for example, a chip or a modem) in the terminal, or may be performed by an apparatus including the function of the terminal.

Further, this application may be applied to a plurality of specific communication scenarios, for example, scenarios of point-to-point transmission between a base station and a terminal or between terminals (such as point-to-point transmission between a base station and a terminal in FIG. 2(a)), multi-hop transmission between a base station and a terminal (such as FIG. 2(b) and FIG. 2(c)), dual connectivity (dual connectivity, DC) (such as FIG. 2(d)) or multiconnectivity among a plurality of base stations and a terminal. It should be noted that the foregoing specific communication application scenarios are merely examples, and do not constitute a limitation. Particularly, from a perspective of services, embodiments of this application are applicable to many service scenarios, for example, a data coding scenario in an extended reality (extended reality, XR) service and an uplink large-capacity scenario. In addition, FIG. 2(a) to FIG. 2(d) impose no limitation on a network architecture applicable to this application, and transmission such as uplink, downlink, access link, backhaul (backhaul) link, and sidelink (sidelink) transmission is not limited in this application.

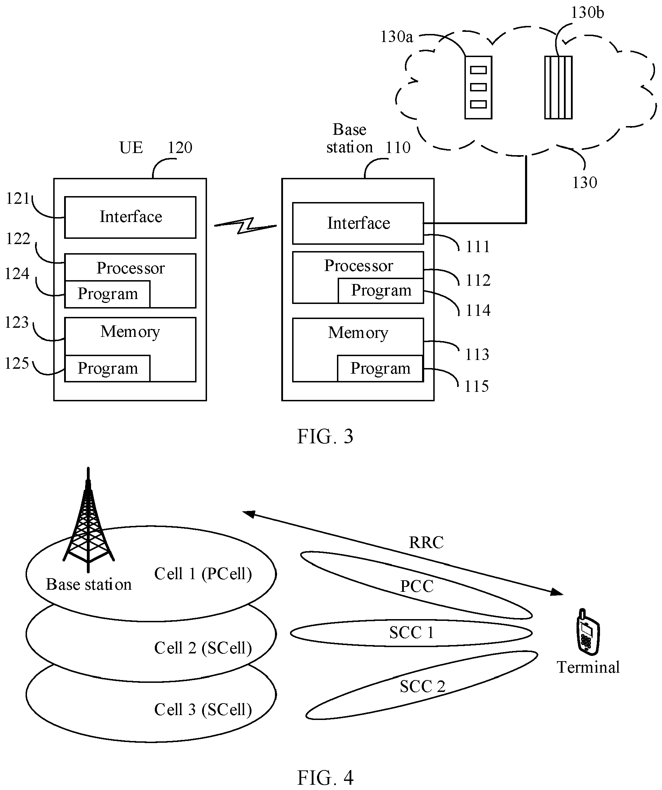

FIG. 3 is a simplified schematic diagram of a communication system according to an embodiment of this application. For brevity, FIG. 3 shows only a base station 110, a UE 120, and a network 130. The base station 110 includes an interface 111 and a processor 112. The processor 112 may optionally store a program 114. The base station 110 may optionally include a memory 113. The memory 113 may optionally store a program 115. The UE 120 includes an interface 121 and a processor 122. The processor 122 may optionally store a program 124. The UE 120 may optionally include a memory 123. The memory 123 may optionally store a program 125. These components work together, to provide various functions described in this application. For example, the processor 112 and the interface 111 work together to provide a wireless connection between the base station 110 and the UE 120. The processor 122 and the interface 121 work together to implement downlink transmission and/or uplink transmission of the UE 120.

The network 130 may include one or more network nodes 130a and 130b, to provide a core network function. The network nodes 130a and 130b may be 5G core network nodes, or earlier-generation (for example, 4G, 3G, or 2G) core network nodes. For example, the networks 130a and 130b may be access management functions (AMFs), mobility management entities (MMEs), or the like. The network 130 may further include one or more network nodes in a public switched telephone network (PSTN), a packet data network, an optical network, or an Internet Protocol (IP) network. A wide area network (WAN), a local area network (LAN), a wireless local area network (WLAN), a wired network, a wireless network, a metropolitan area network, and another network, so that communication can be performed between the UE 120 and/or the base station 110.

The processor (for example, the processor 112 and/or the processor 122) may include one or more processors and is implemented as a combination of computing devices. The processor (for example, the processor 112 and/or the processor 122) may separately include one or more of the following: a microprocessor, a microcontroller, a digital signal processor (DSP), a digital signal processing device (DSPD), an application-specific integrated circuit (ASIC), a field programmable gate array (FPGA), a programmable logic device (PLD), gating logic, transistor logic, a discrete hardware circuit, a processing circuit, or other proper hardware, firmware, and/or a combination of hardware and software, configured to perform various functions described in this application. The processor (for example, the processor 112 and/or the processor 122) may be a general-purpose processor or a dedicated processor. For example, the processor 112 and/or the processor 122 each may be a baseband processor or a central processing unit. The baseband processor may be configured to process a communication protocol and communication data. The central processing unit may be configured to enable the base station 110 and/or the UE 120 to execute a software program and process data in the software program.

The interface (for example, the interface 111 and/or 121) may be configured to implement communication with one or more computer devices (for example, a UE, a BS, and/or a network node). In some embodiments, the interface may include a wire for coupling a wired connection, or a pin for coupling a wireless transceiver, or a chip and/or a pin for a wireless connection. In some embodiments, the interface may include a transmitter, a receiver, a transceiver, and/or an antenna. The interface may be configured to use any available protocol, such as the 3rd Generation Partnership Project (3GPP) standard.

The program in this application represents software in a broad sense. A non-limiting example of the software is program code, a program, a subprogram, an instruction, an instruction set, code, a code segment, a software module, an application program, or a software application program. The program may run in a processor and/or a computer, so that the base station 110 and/or the UE 120 perform various functions and/or processes described in this application.

The memory (for example, the memory 113 and/or the memory 123) may store data manipulated by the processors 112 and 122 when executing software. The memories 113 and 123 may be implemented by using any storage technology. For example, the memory may be any available storage medium that can be accessed by the processor and/or the computer. A non-limiting example of the storage medium includes a RAM, a ROM, an EEPROM, a CD-ROM, a removable medium, an optical disc memory, a magnetic disk storage medium, a magnetic storage device, a flash memory, a register, a state memory, a remote mounted memory, a local or remote storage component, or any other medium that can carry or store software, data, or information and accessible by the processor/computer.

The memory (for example, the memory 113 and/or the memory 123) and the processor (for example, the processor 112 and/or the processor 122) may be separately disposed or integrated. The memory may be configured to connect to the processor, so that the processor can read information from the memory, and store information in and/or write information into the memory. The memory 113 may be integrated into the processor 112. The memory 123 may be integrated into the processor 122. The processor (for example, the processor 113 and/or the processor 123) and the memory (for example, the processor 112 and/or the processor 122) may be disposed in an integrated circuit (for example, the integrated circuit may be disposed in a UE, a base station, or another network node).

Based on the architecture shown in FIG. 3, the UE transmits uplink data to the base station through an air interface, and/or receives downlink transmission from the base station through the air interface.

To increase a peak rate and meet a requirement of an enhanced mobile broadband (enhanced mobile broadband, eMBB) scenario, bandwidths of a plurality of cells are aggregated through carrier aggregation (carrier aggregation, CA), to break a limitation of fixed performance of a single cell. In this technology, a plurality of component carriers (component carriers, CCs) (carriers for short) may be aggregated for use by one UE, so that a bandwidth that can be used by the UE is a sum of the bandwidths of the plurality of carriers, and a peak rate of the UE can also be increased almost proportionally.

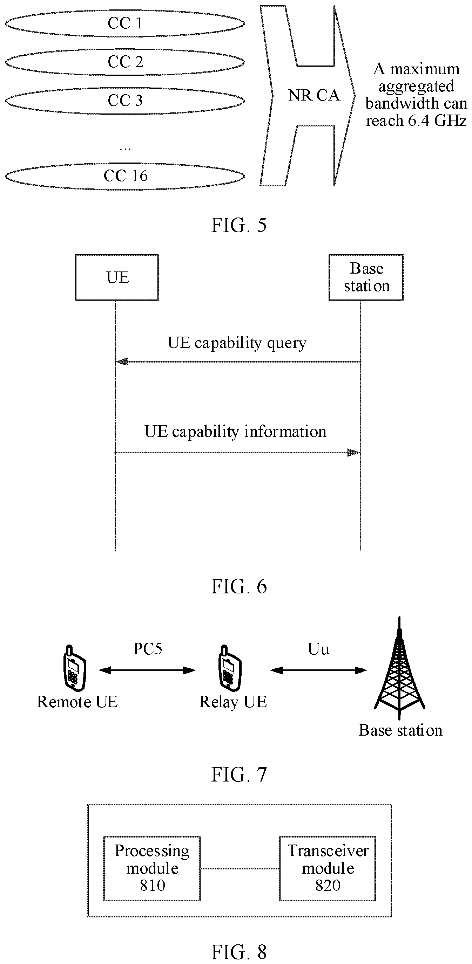

FIG. 4 shows a scenario of aggregation of three carriers, where to be specific, a UE may use three carriers at the same time. One carrier is referred to as a primary component carrier (primary component carrier, PCC), and a cell corresponding to the PCC is referred to as a primary cell (primary cell, PCell). The other two carriers are referred to as secondary component carriers (secondary component carriers, SCCs), and a cell corresponding to the SCC is referred to as a secondary cell (secondary cell, SCell). According to the 3GPP protocol, currently, a maximum of 16 CCs can be aggregated through carrier aggregation in new radio (new radio, NR). As shown in FIG. 5, in this case, a maximum aggregated bandwidth may reach 6.4 GHz.

In addition, depending on whether CCs participating in aggregation belong to a same frequency band and are contiguous in frequency domain, carrier aggregation may be classified into the following manners:
(1) Intra-band contiguous carrier aggregation: CCs belong to the same frequency band and are contiguous in frequency domain.
(2) Intra-band non-contiguous carrier aggregation: CCs belong to the same frequency band and are non-contiguous in frequency domain.
(3) Inter-band carrier aggregation: CCs belong to different frequency bands (where the plurality of CCs are basically non-contiguous in frequency domain because the CCs belong to the different frequency bands).

The foregoing carrier aggregation manners describe a carrier aggregation capability of a base station from a perspective of the base station. However, implementation of carrier aggregation is closely related to a capability of a UE. A carrier aggregation capability that can be actually obtained by a UE is determined based on both the UE and a carrier aggregation capability of a base station connected to the UE. The carrier aggregation capability of the UE mainly means a frequency band combination supported by the UE. A process of reporting a carrier aggregation capability of a UE is shown in FIG. 6. A base station may query the capability of the UE by using UE capability enquiry (UE capability enquiry) signaling, and then the UE reports the carrier aggregation capability to the base station by using UE capability information (UE capability information) signaling. Therefore, the base station may configure, based on the capability reported by the UE, the UE to perform carrier-aggregated transmission.

A basis of a current user cooperation technology includes a direct communication (Device-to-Device, D2D) technology, a U2N relay (relay) technology, and the like. The U2N relay technology is a technology in which one UE helps another UE to communicate with a base station, and is also referred to as a relay technology. A communication architecture of the U2N relay technology is shown in FIG. 7. A remote (remote) UE communicates with a base station through cooperation of a relay UE. The remote UE communicates with the relay UE by using a sidelink, and a corresponding interface is referred to as a PC5 interface. In this case, if the remote UE maintains communication between the remote UE and the base station through an air interface at the same time, cooperation of the relay UE with the remote UE may bring an uplink performance gain.

In view of the foregoing objective of improving uplink transmission performance of the UE through user cooperation, an embodiment of this application provides a communication method. The method may be performed by a first terminal apparatus, a second terminal apparatus, and a network device. For example, the first terminal apparatus serves as a service UE (service UE, SUE) or a component (such as a chip, a module, or an interface circuit) in the SUE, and the second terminal apparatus serves as a cooperation UE (cooperation UE, CUE) or a component in the CUE. For example, the network device is a base station or another access network device. This is not specifically limited. The CUE may be configured to assist the SUE in uplink transmission.

In the method, the first terminal apparatus may improve an uplink capability of a single user through UE cooperation of the second terminal apparatus based on a CA technical principle. In this embodiment of this application, the second terminal apparatus relays transport block (transport block, TB) data delivered at a MAC layer of the service UE, and forwards the transport block data to a physical layer of the network device by using an uplink carrier of the second terminal apparatus. Optionally, the second terminal apparatus further sends data of the second terminal apparatus on the uplink carrier. Through scheduling and configuration of the network device, the second terminal apparatus implements transmission of cooperation/relay data of the first terminal apparatus and transmission of the data of the second terminal apparatus on different time domain resources of the uplink carrier.

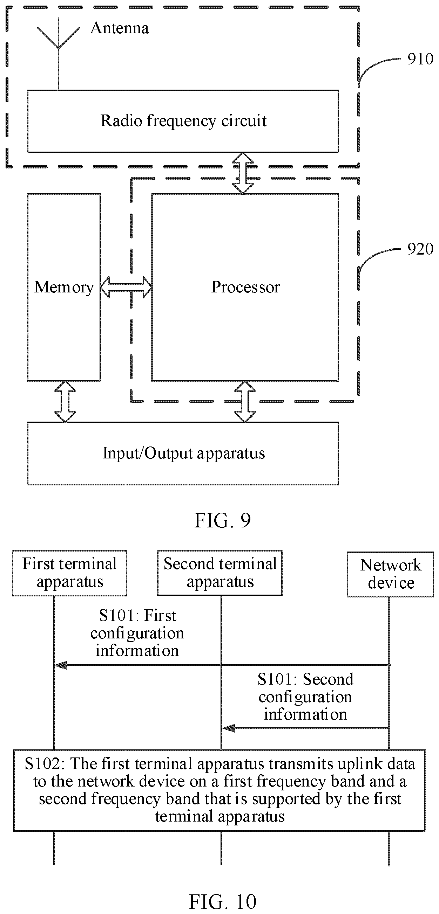

FIG. 8 and FIG. 9 are schematic diagrams of structures of terminal apparatuses provided in embodiments of this application, where the terminal apparatuses are configured to implement the communication method provided in embodiments of this application.

For example, FIG. 8 is a schematic diagram of a structure a possible terminal apparatus. The structure may include a processing module (or processing unit) 810 and a transceiver module (or processing unit) 820. For example, the structure shown in FIG. 8 may be a terminal device, or may be a chip used in the terminal device, or another combined device, member (or referred to as component) having a function of the terminal device shown in this application. When the structure is the terminal device, the transceiver module 820 may be a transceiver, where the transceiver may include an antenna, a radio frequency circuit, and the like; the processing module 810 may be a processor, for example, a baseband processor, where the baseband processor may include one or more central processing units (central processing units, CPUs). When the structure is the component having the function of the terminal device shown in this application, the transceiver module 820 may be a radio frequency unit, and the processing module 810 may be a processor, for example, a baseband processor. When the structure is a chip system, the transceiver module 820 may be an input/output interface of a chip (for example, a baseband chip), the processing module 810 may be a processor of the chip system, and may include one or more central processing units. It should be understood that, in this embodiment of this application, the processing module 810 may be implemented as a processor or a processor-related circuit component, and the transceiver module 820 may be implemented as a transceiver or a transceiver-related circuit component.

For example, the processing module 810 may be configured to perform all operations, except sending and receiving operations, performed by the first terminal apparatus and/or the second terminal apparatus in any embodiment of this application, for example, a processing operation, and/or another process used to support the technology described in this specification, for example, generating a message, information, and/or signaling sent by the transceiver module 820, and processing a message, information, and/or signaling received by the transceiver module 820. The transceiver module 820 may be configured to perform all receiving and sending operations performed by the first terminal apparatus and/or the second terminal apparatus in any embodiment of this application, and/or configured to support another process of the technology described in this specification, for example, data sending and/or receiving.

In addition, the transceiver module 820 may be a function module, and the function module may complete both a sending operation and a receiving operation. For example, the transceiver module 820 may be configured to perform all sending operations and receiving operations performed by a relay node and/or a remote node. For example, when the sending operation is performed, the transceiver module 820 may be considered as a sending module, and when the receiving operation is performed, the transceiver module 820 may be considered as a receiving module. Alternatively, the transceiver module 820 may be two function modules, the transceiver module 820 may be considered as a general term of the two function modules, and the two function modules are respectively a sending module and a receiving module. The sending module is configured to complete a sending operation. For example, the sending module may be configured to perform all sending operations performed by the first terminal apparatus or the second terminal apparatus. The receiving module is configured to complete a receiving operation, and the receiving module may be configured to perform all receiving operations performed by the relay node and/or the remote node.

FIG. 9 is a schematic diagram of a structure of another terminal apparatus. The structure is configured to perform actions performed by a first terminal apparatus and/or a second terminal apparatus according to an embodiment of this application. For ease of understanding and convenience of illustration, as shown in FIG. 9, the terminal apparatus may include a processor, a memory, a radio frequency circuit, an antenna, and an input/output apparatus. The processor is mainly configured to: process a communication protocol and communication data, control the terminal apparatus, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send the radio frequency signal in a form of an electromagnetic wave. The input/output apparatus, such as a touchscreen, a display, or a keyboard, is mainly configured to: receive data entered by a user and output data to the user. It should be noted that some types of terminal apparatuses may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal apparatus, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 9 shows only one memory and one processor. In an actual terminal device product, there may be one or more processors and one or more memories. The memory may also be referred to as a storage medium, a storage device, or the like. The memory may be disposed independent of the processor, or may be integrated into the processor. This is not limited in this embodiment of this application.

In this embodiment of this application, an antenna and a radio frequency circuit that have a transceiver function may be considered as a transceiver unit of the terminal apparatus (where the transceiver unit may be one functional unit, and the functional unit can implement a sending function and a receiving function; or the transceiver unit may include two functional units: a receiving unit that can implement a receiving function and a sending unit that can implement a sending function), and a processor having a processing function may be considered as a processing unit of the terminal apparatus. As shown in FIG. 9, the terminal apparatus includes a transceiver unit 910 and a processing unit 920. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 910 and that is configured to implement a receiving function may be considered as a receiving unit, and a component that is in the transceiver unit 910 and that is configured to implement a sending function may be considered as a sending unit. In other words, the transceiver unit 910 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 910 may correspond to the transceiver module 820, or the transceiver module 820 may be implemented as the transceiver unit 910. The transceiver unit 910 is configured to perform sending operations and receiving operations of the first terminal apparatus and/or the second terminal apparatus in this embodiment shown in this application, and/or is configured to support another process of the technology described in this specification. It should be understood that the processing unit 920 may correspond to the processing module 810, or the processing module 810 may be implemented as the processing unit 920. The processing unit 920 is configured to perform operations other than receiving and sending operations of the first terminal apparatus and/or the second terminal apparatus in the embodiment shown in this application, for example, configured to perform all operations, except receiving and sending operations, performed by the first terminal apparatus and/or the second terminal apparatus in the embodiment shown in this application, and/or configured to support another process of the technology described in this specification.

Optionally, in this application, the first communication apparatus and the second communication apparatus may communicate with each other in a non-3GPP manner, for example, in a wired manner. In this case, if the first terminal apparatus and the second terminal apparatus are implemented by using the structure shown in FIG. 8, the transceiver module 820 may further include a communication interface configured to support wired communication. If the first terminal apparatus and the second terminal apparatus are implemented by using the structure shown in FIG. 9, the first terminal apparatus and the second terminal apparatus may further include a communication interface, for example, the input/output apparatus includes a communication interface.

In addition, the structures shown in FIG. 8 and/or FIG. 9 may be further configured to implement the network device provided in this embodiment of this application. The network device may support wireless communication with the first terminal apparatus and/or the second terminal apparatus. A wireless communication function may be implemented by using the transceiver module 820 shown in FIG. 8, and/or implemented by using the transceiver unit 910 shown in FIG. 9. For implementations of the transceiver module 820 and the transceiver unit 910, refer to the foregoing descriptions. The network device may have a processing function, and is configured to implement processing steps that are performed by the network device and that are in the communication method provided in embodiment of this application. The processing function may be implemented by the processing module 810 shown in FIG. 8, and/or implemented by the processing unit 920 shown in FIG. 9. For implementations of the processing module 810 and the processing unit 920, refer to the foregoing descriptions.

It should be understood that the communication method provided in embodiments of this application may be implemented by the first terminal apparatus, the second terminal apparatus, and the network device. The first terminal apparatus may be used as a SUE or a component in the SUE, the second terminal apparatus may be used as a CUE or a component in the CUE, and the network device is, for example, a base station or a component in the base station. Therefore, in this application, the first terminal apparatus may transmit uplink data to the network device with assistance of the second terminal apparatus.

Structures of the first terminal apparatus, the second terminal apparatus, and the network device are shown in FIG. 8 and/or FIG. 9. The transceiver module 820 and/or the transceiver unit 910 may be configured to perform a sending operation and a receiving operation that are performed by the first terminal apparatus, the second terminal apparatus, or the network device in the communication method. The processing module 810 and/or the processing unit 920 may be configured to perform processing operations and/or all operations except receiving and sending that are performed by the first terminal apparatus, the second terminal apparatus, or the network device in the communication method.

As shown in FIG. 10, the communication method provided in embodiments of this application may include the following steps.

S101: A network device sends first configuration information to a first terminal apparatus, and sends second configuration information to a second terminal apparatus.

The first configuration information may indicate an identifier of the second terminal apparatus and an identifier of a first frequency band, and the first frequency band is a frequency band supported by the second terminal apparatus. In this application, if the network device configures a frequency band (or some frequency bands) of a terminal apparatus to operate, it is considered that the terminal apparatus supports the frequency band. The first configuration information may alternatively indicate that the first frequency band, together with a second frequency band supported by the first terminal apparatus, are for transmitting uplink data to the network device; or indicate that the first frequency band is a frequency band supported by the second terminal apparatus. It should be understood that the uplink transmission herein is, for example, uplink cooperation transmission.

Optionally, the second configuration information may further indicate that the first frequency band is for assisting the first terminal apparatus in uplink transmission. For example, when the second configuration information indicates that the first frequency band is for assisting the first terminal apparatus in uplink transmission, the network device may further schedule, by using scheduling information, the second terminal apparatus to perform uplink transmission at some moments, to assist the first terminal apparatus in uplink transmission. In addition, the network device may further schedule, by using the scheduling information, the second terminal apparatus to perform uplink transmission at some other moments, to transmit data of the second terminal apparatus. For another example, when the second configuration information indicates that the first frequency band is dedicated to assisting the first terminal apparatus in uplink transmission, the second terminal apparatus does not transmit uplink data of the second terminal apparatus on the first frequency band.

Correspondingly, the first terminal apparatus receives the first configuration information, and the second terminal apparatus receives the second configuration information.

S102: The first terminal apparatus transmits uplink data to the network device on the first frequency band and the second frequency band that is supported by the first terminal apparatus.

For ease of description in this application, data that is sent by the first terminal apparatus to the second terminal apparatus and that needs to be sent by the second terminal apparatus to the network device is referred to as first data, data that is of the first terminal apparatus and that is transmitted by the second terminal apparatus to the network device is referred to as second data, and a process of transmitting the data of the first terminal apparatus by the second terminal apparatus to the network device is referred to as a data cooperation process. A link for data transmission between the first terminal apparatus and the second terminal apparatus may be referred to as a cooperation link. It should be understood that the cooperation link may be a stable non-3GPP link, such as an optical fiber, a circuit in a chip, or a Wi-Fi connection, or may be a link of a type defined in the 3GPP standard, such as a sidelink. This is not limited herein.

S 102 may specifically include the following steps. Step 1: The first terminal apparatus sends the first data to the second terminal apparatus. Step 2: The second terminal apparatus sends the second data to the network device on the first frequency band, where the second data is determined based on the first data of the first terminal apparatus. Step 3: The first terminal apparatus transmits uplink data to the network device on the second frequency band. Step 3 may be performed before or after step 1 and/or step 2, or may be performed simultaneously with step 1 or step 2. This is not specifically limited in this application.

Correspondingly, the network device receives, from the first terminal apparatus, the second data sent on the first frequency band supported by the second terminal apparatus and the data sent on the second frequency band supported by the first terminal apparatus.

Based on the foregoing method, the network device may indicate, to the first terminal apparatus, the first frequency band on which the second terminal apparatus operates. Therefore, the network device can sense that the first frequency band is an operating frequency band of the second terminal apparatus, and indicate that the first frequency band is for assisting the first terminal apparatus in data transmission. This can avoid a conflict of simultaneously scheduling the second terminal apparatus to transmit other data (for example, the data of the second terminal apparatus) on a same resource in the first frequency band, so that uplink transmission performance can be improved.

Before S101, the first terminal apparatus or the network device may determine that the second terminal apparatus performs uplink data transmission of the first terminal apparatus on the first frequency band and the second frequency band that is supported by the first terminal apparatus.

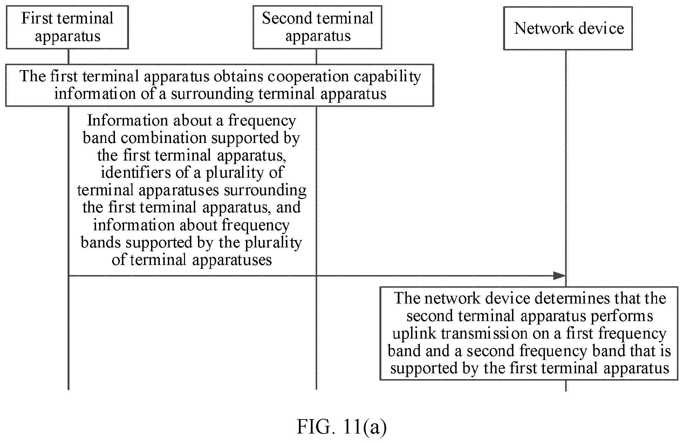

The following describes, by using examples and with reference to FIG. 11(a) to FIG. 11(c), a manner of determining that the second terminal apparatus performs uplink transmission of the first terminal apparatus on the first frequency band and the second frequency band that is supported by the first terminal apparatus.

### Manner 1

It is assumed that the network device determines that the second terminal apparatus performs uplink transmission of the first terminal apparatus on the first frequency band and the second frequency band that is supported by the first terminal apparatus. For example, the first terminal apparatus may send first information to the network device, and the network device determines, based on the first information, that the second terminal apparatus performs uplink transmission of the first terminal apparatus on the first frequency band and the second frequency band that is supported by the first terminal apparatus. The first information may include information about a frequency band combination supported by the first terminal apparatus, the identifier of the second terminal apparatus and information about a frequency band supported by the second terminal apparatus, an identifier of a third terminal apparatus and information about a frequency band supported by the third terminal apparatus, delay information between the first terminal apparatus and the second terminal apparatus, or delay information between the first terminal apparatus and the third terminal apparatus.

In Manner 1, the second terminal apparatus and the third terminal apparatus may be surrounding terminal apparatuses of the first terminal apparatus. The first terminal apparatus may receive cooperation capability information from a surrounding terminal apparatus, where the cooperation capability information may include an identifier of the surrounding terminal apparatus and information about a frequency band supported by the surrounding terminal apparatus.

In an implementation, as shown in FIG. 11(a), the first terminal apparatus may send, to the network device, the information about the frequency band combination supported by the first terminal apparatus, and identifiers of a plurality of terminal apparatuses surrounding the first terminal apparatus and/or information about frequency bands supported by the plurality of terminal apparatuses, and the network device determines, based on the information about the frequency band combination supported by the first terminal apparatus, the identifiers of the plurality of terminal apparatuses, and the information about the frequency bands supported by the plurality of terminal apparatuses, the second terminal apparatus and that the first frequency band supported by the second terminal apparatus is for uplink transmission of the first terminal apparatus.

In a possible implementation, the information about the frequency band combination supported by the first terminal apparatus may be carried in a UE capability report, and the identifiers of the plurality of terminal apparatuses surrounding the first terminal apparatus and/or the information about the frequency bands supported by the plurality of terminal apparatuses may be carried in the UE capability report, or the identifiers of the plurality of terminal apparatuses surrounding the first terminal apparatus and/or the information about the frequency bands supported by the plurality of terminal apparatuses may alternatively be carried in other information, for example, carried in an RRC message or a media access control (media access control, MAC) control element (control element, CE). The information about the frequency band combination supported by the first terminal apparatus and the identifiers of the plurality of terminal apparatuses surrounding the first terminal apparatus and/or the information about the frequency bands supported by the plurality of terminal apparatuses may be carried in same signaling, or carried in different signaling.

In addition, the first terminal apparatus may alternatively send the identifiers of the plurality of terminal apparatuses surrounding the first terminal apparatus to the network device by using the UE capability report or other information, so that the network device determines, based on the identifiers of the surrounding terminal apparatuses, the information about the frequency bands supported by the terminal apparatuses surrounding the first terminal apparatus. For example, the network device may determine, based on previous configuration of the frequency bands supported by the surrounding terminal apparatuses and/or the previously obtained information about the frequency bands supported by the surrounding terminals, the information about the frequency bands of the plurality of terminal apparatuses surrounding the first terminal apparatus.

The information about the frequency band combination supported by the first terminal apparatus may indicate the frequency band combination supported by the first terminal apparatus. The information about the frequency band combination supported by the first terminal apparatus may indicate that the first terminal apparatus supports carrier aggregation on the second frequency band and another frequency band, and is used by the first terminal apparatus to perform uplink transmission. In other words, the information about the frequency band combination supported by the first terminal apparatus may be used for determining the second terminal apparatus and the first frequency band. If none of frequency bands supported by a terminal apparatus belongs to the frequency band combination supported by the first terminal apparatus, the terminal apparatus is not used as the second terminal apparatus.

The first terminal apparatus may receive the identifiers and/or the information about the supported frequency bands that are/is sent by the surrounding terminal apparatuses, where the information about the supported frequency bands may be information about frequency bands that have been configured or are configurable by the surrounding terminal apparatuses. Each surrounding terminal apparatus may send cooperation capability information to another surrounding terminal apparatus in a unicast, broadcast, or multicast manner, where the cooperation capability information includes an identifier of the terminal apparatus and/or information about a frequency band supported by the terminal apparatus. Optionally, a terminal apparatus that receives the cooperation capability information from the surrounding terminal apparatus may also feed back the cooperation capability information of the terminal apparatus to the surrounding terminal apparatus.

In this application, an identifier of a terminal apparatus may be a cell-radio network temporary identifier (cell-radio network temporary identifier, C-RNTI). The identifier of the terminal apparatus may alternatively be another identifier allocated by the first terminal apparatus or the network device. This is not specifically limited.

For example, a CC 1 of a CUE 1 surrounding a SUE may be used for data cooperation, and a CC 2 and a CC 3 of a CUE 2 may be used for data cooperation. In this case, the SUE receives cooperation capability information of {an identifier of the CUE 1, information about the CC 1} from the CUE 1, and receives cooperation capability information of {an identifier of the CUE 2, information about the CC 2 and the CC 3} from the CUE 2.

In addition, cooperation capability information received by the SUE may further include uplink transmission channel quality of a CUE surrounding the SUE, service load information of the CUE, or the like. After receiving information such as the uplink transmission channel quality or the service load information of the CUE surrounding the SUE, the SUE sends, to the network device by using same or different information or message(s), the identifiers of the plurality of terminal apparatuses and the information about the frequency bands supported by the plurality of terminal apparatuses, as reference information for the network device to select a proper CUE. The uplink transmission channel quality of the CUE or the service load information of the CUE may be used by the network device to select a CUE that provides cooperation for the SUE. Optionally, the network device may select, from all CUEs surrounding the SUE and based on uplink transmission channel quality of the CUEs, service load information of the CUEs, or the like, one or more CUEs as the CUE that provides cooperation for the SUE, where a Uu interface between the network device and the CUE has good channel quality and low load, and a cooperation link between the CUE and the SUE has good signal quality or a high transmission rate. A frequency band supported by the CUE may be used as the first frequency band.

In a possible manner of obtaining the cooperation capability information of the surrounding terminal, the SUE may send a cooperation request message in a broadcast, multicast, or unicast manner, to request cooperation of a surrounding CUE. In this case, if the surrounding CUE can provide cooperation, the cooperation capability information may be sent to the SUE in the broadcast, multicast, or unicast manner. If a terminal apparatus cannot provide data cooperation or does not support data cooperation, after receiving a cooperation request message of a surrounding terminal apparatus, the terminal apparatus may return an indication indicating that the terminal apparatus cannot provide uplink data transmission cooperation, or may not send any response information, and the surrounding terminal apparatus considers by default that the terminal apparatus does not support data cooperation.

Optionally, in this implementation, the network device may query capability information of the first terminal apparatus by using UE capability query signaling, and the first terminal apparatus carries information about a frequency band supported by the first terminal apparatus in the UE capability information signaling, and feeds back the UE capability information to the network device. Alternatively, the network device may request, by using RRC signaling, the UE to report the capability information. After receiving the request, the UE feeds back the UE capability information to the network device by using RRC signaling. This is not limited herein.

Further, optionally, the plurality of terminal apparatuses may include the second terminal apparatus, or include the second terminal apparatus and at least one third terminal apparatus other than the second terminal apparatus. If the network device determines that the frequency band combination supported by the first terminal apparatus does not include a frequency band supported by a terminal apparatus, the network device may determine not to use the terminal apparatus as the second terminal apparatus. On the contrary, if the network device determines that the frequency band combination supported by the first terminal apparatus includes a frequency band supported by a terminal apparatus, the network device may determine that the terminal apparatus is used as a candidate terminal apparatus of the second terminal apparatus, determine the second terminal apparatus from all candidate terminal apparatuses, and determine the first frequency band based on the frequency band supported by the second terminal apparatus. For example, the network device may select, from all candidate terminal apparatuses based on uplink transmission channel quality of the candidate terminal apparatuses or service load information of the candidate terminal apparatuses that is reported by the first terminal apparatus or obtained by the network device from the candidate terminal apparatuses, one or more terminal apparatuses as the second terminal apparatus, where a Uu interface between the candidate terminal apparatus and the network device has good channel quality and low load, and a cooperation link between the first terminal apparatus and the candidate terminal apparatus has good signal quality or a high transmission rate. A frequency band supported by the second terminal apparatus may be used as the first frequency band.

In addition, in this example, the network device may further obtain service requirement information of the first terminal apparatus. For example, the service requirement information may indicate requirement information such as an uplink traffic volume, a transmission rate, or a delay of the first terminal apparatus. Therefore, the network device may determine the second terminal apparatus and the first frequency band based on the information about the frequency band supported by the first terminal apparatus and the service requirement information. For example, the network device may determine the second terminal apparatus from the candidate terminal apparatuses with reference to the service requirement information of the first terminal apparatus, for example, select a quantity of second terminal apparatuses based on a requirement of the uplink traffic volume.

Optionally, in Manner 1, the first terminal apparatus may report delay information between the first terminal apparatus and the surrounding terminal apparatus to the network device, where the delay information may include a transmission delay between the first terminal apparatus and the surrounding terminal apparatus. After determining the second terminal apparatus, the network device may learn of the delay information between the first terminal apparatus and the second terminal apparatus, so that the network device determines scheduling resources used when scheduling the first terminal apparatus to perform uplink transmission on the first frequency band and the second frequency band respectively. In addition, processing delay information of the second terminal apparatus may further need to be considered. To be specific, after the first terminal apparatus sends the first data to the second terminal apparatus through the cooperation link between the first terminal apparatus and the second terminal apparatus, the second terminal apparatus identifies and determines a processing delay of forwarding resources.

It should be understood that, the first terminal apparatus may carry the delay information between the first terminal apparatus and the surrounding terminal apparatus when reporting the cooperation capability information of each surrounding terminal apparatus to the network device. Alternatively, the first terminal apparatus may send the delay information between the first terminal apparatus and the surrounding terminal apparatus to the network device by using UE auxiliary information or independent signaling.

### Manner 2

If the network device determines that the second terminal apparatus performs uplink transmission on the first frequency band and the second frequency band that is supported by the first terminal apparatus, in an implementation, the first terminal apparatus may send at least one of the following information to the network device, and the network device determines, based on the received information, that the second terminal apparatus performs uplink transmission on the first frequency band and the second frequency band that is supported by the first terminal apparatus: the identifier of the second terminal device and information about a frequency band supported by the second terminal device, an identifier of a third terminal device and information about a frequency band supported by the third terminal device, delay information between the first terminal device and the second terminal device, or delay information between the first terminal device and the third terminal device. It is difference from Manner 1 that, in Manner 2, the second terminal apparatus and the third terminal apparatus are surrounding terminal apparatuses determined by the first terminal apparatus based on information about a frequency band combination supported by the first terminal apparatus. In other words, if a frequency band supported by a surrounding terminal apparatus does not meet a requirement of the frequency band combination supported by the first terminal apparatus, the terminal apparatus is not used as the second terminal apparatus or the third terminal apparatus.

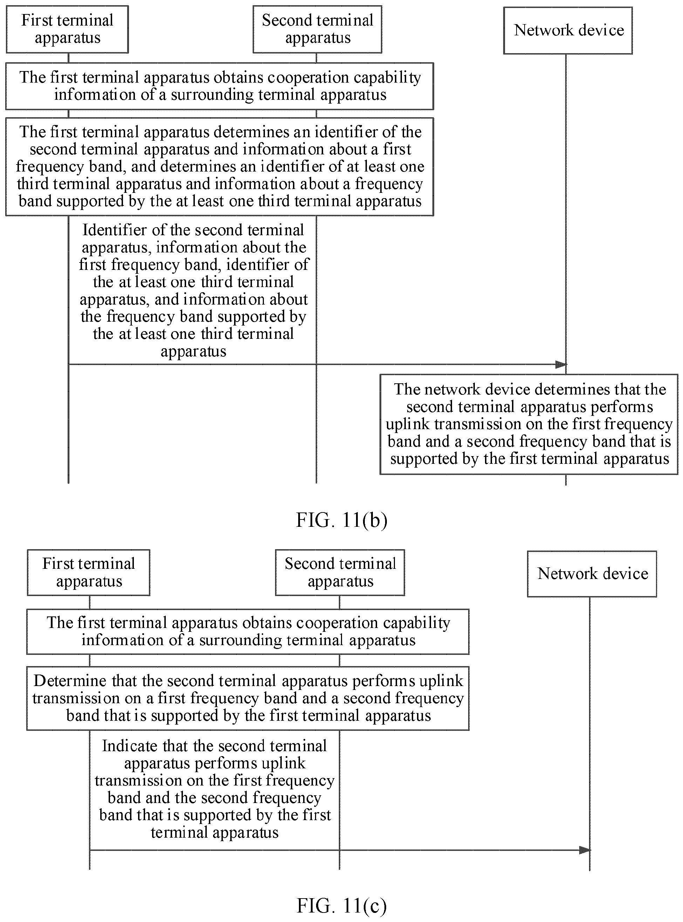

As shown in FIG. 11(b), the first terminal apparatus may obtain cooperation capability information of a surrounding terminal apparatus, determine, based on the information about the frequency band combination supported by the first terminal apparatus, identifiers of a plurality of terminal apparatuses surrounding the first terminal apparatus, and information about frequency bands supported by the plurality of terminal apparatuses, the identifier of the second terminal apparatus and/or information about a frequency band (including the first frequency band) supported by the second terminal apparatus, and determine an identifier of at least one third terminal apparatus and/or information about a frequency band supported by the third terminal apparatus. The frequency band combination supported by the first terminal apparatus includes the frequency band supported by the second terminal apparatus and the frequency band supported by the third terminal apparatus. For a manner in which the first terminal apparatus obtains the cooperation capability information of the surrounding terminal apparatus, refer to the descriptions in Manner 1. For the cooperation capability information, refer to the descriptions in Manner 1.

Optionally, the first terminal apparatus may further send the identifier of the second terminal apparatus, information about the frequency band supported by the second terminal apparatus, an identifier of the at least one third terminal apparatus, and information about a frequency band supported by the at least one third terminal apparatus to the network device, so that the network device determines that the second terminal apparatus performs uplink transmission on the first frequency band and the second frequency band that is supported by the first terminal apparatus.

For the information about the frequency band combination supported by the first terminal apparatus, refer to the descriptions in Manner 1.

In Manner 2, the first terminal apparatus does not need to report the obtained identifiers of all surrounding terminal apparatuses and/or the information about frequency bands supported by the surrounding terminal apparatuses to the network device, and only needs to report, to the network device, identifiers of the second terminal apparatus and the third terminal apparatus and/or information about frequency bands supported by the second terminal apparatus and the third terminal apparatus, where the second terminal apparatus and the third terminal apparatus satisfy the information about the frequency band combination supported by the first terminal apparatus. This can reduce signaling overheads compared with Manner 1. For a manner in which the network device determines, based on the identifiers of the second terminal apparatus and the third terminal apparatus and the information about the frequency bands supported by the second terminal apparatus and the third terminal apparatus, that the second terminal apparatus performs uplink transmission on the first frequency band and the second frequency band that is supported by the first terminal apparatus, refer to the descriptions of determining, by the network device, the second terminal apparatus from the candidate terminal apparatuses in Manner 1. For example, the network device may select, from the second terminal apparatus and the third terminal apparatus, one or more terminal apparatuses as the second terminal apparatus, where a Uu interface between the terminal apparatus and the network device has good channel quality and low load, or a cooperation link between the terminal apparatus and the first terminal apparatus has good signal quality or a high transmission rate. The frequency band supported by the second terminal apparatus may be used as the first frequency band.

Optionally, similar to Manner 1, in Manner 2, the first terminal apparatus may report delay information between the first terminal apparatus and the second terminal apparatus and delay information between the first terminal apparatus and the third terminal apparatus to the network device. For an implementation, refer to the descriptions in Manner 1.

In the foregoing Manner 1 and Manner 2, the first terminal apparatus and the second terminal apparatus may access a same network device, namely, the network device.

In a possible implementation, the cooperation capability information sent by the surrounding terminal device to the first terminal apparatus further includes identifier (identifier, ID) information, for example, a base station ID or a cell ID, of a network device connected to the surrounding terminal device. After receiving the ID information of the network device sent by the surrounding terminal apparatus, the first terminal apparatus compares the ID information with an ID of a base station or an ID of a cell connected to the first terminal apparatus, selects a second terminal apparatus and a third terminal apparatus that access the same network device as the first terminal apparatus, and reports, to the network device, the identifier of the second terminal apparatus, the information about the frequency band supported by the second terminal apparatus, the identifier of the third terminal apparatus, and the information about the frequency band supported by the third terminal apparatus. In this implementation, the third terminal apparatus is used by the first terminal apparatus and the second terminal apparatus to access the same network device.

In another implementation, cooperation capability information of the second terminal apparatus and cooperation capability information of the third terminal apparatus that are sent by the first terminal apparatus to the network device may respectively carry ID information of a network device accessed by the second terminal apparatus and ID information of a network device accessed by the third terminal apparatus. Therefore, the network device may select the second terminal apparatus that accesses the same network device as the first terminal apparatus. In this implementation, the third terminal apparatus and the first terminal apparatus may access different network devices. Alternatively, in another implementation, the network device may determine, based on the identifiers of the second terminal apparatus and the third terminal apparatus, terminal apparatuses that access the same network device (namely, the current network device) as the first terminal apparatus, and determine the second terminal apparatus from the terminal apparatuses that access the same network device as the first terminal apparatus.

In another implementation, in Manner 2, in addition to selecting the second terminal apparatus and the third terminal apparatus from the surrounding terminal apparatuses based on the information about the frequency bands supported by the terminal apparatuses, the first terminal apparatus may further select the second terminal apparatus and the third terminal apparatus based on other cooperation capability information, for example, uplink transmission channel quality or service load information, of the surrounding terminal apparatuses, and then, the first terminal apparatus may report, to the network device, information including the identifier of the second terminal apparatus and the information about the frequency band supported by the second terminal apparatus and/or the identifier of the third terminal apparatus and the information about the frequency band supported by the third terminal apparatus. For this implementation, refer to the foregoing descriptions. Details are not described herein again.

### Manner 3

If the first terminal apparatus determines that the second terminal apparatus performs uplink transmission on the first frequency band and the second frequency band that is supported by the first terminal apparatus, in an implementation, as shown in FIG. 11(c), the first terminal apparatus may obtain cooperation capability information of a surrounding terminal apparatus, determine, based on the information about the frequency band combination supported by the first terminal apparatus, identifiers of a plurality of terminal apparatuses surrounding the first terminal apparatus, and information about frequency bands supported by the plurality of terminal apparatuses, that the second terminal apparatus performs uplink transmission on the first frequency band and the second frequency band that is supported by the first terminal apparatus, and indicate, to the network device, that the second terminal apparatus performs uplink transmission on the first frequency band and the second frequency band that is supported by the first terminal apparatus. For a manner in which the first terminal apparatus obtains the cooperation capability information of the surrounding terminal apparatus, refer to the descriptions in Manner 1. For the cooperation capability information, refer to the descriptions in Manner 1.

For a manner in which the network device determines that the second terminal apparatus performs uplink transmission on the first frequency band and the second frequency band that is supported by the first terminal apparatus in Manner 3, refer to the descriptions of determining, by the network device, the second terminal apparatus from the candidate terminal apparatuses in Manner 1. For example, the first terminal apparatus may determine candidate terminal apparatuses, where a frequency band combination supported by the first terminal apparatus includes frequency bands supported by the candidate terminal apparatuses. Then, the first terminal apparatus selects, from all candidate terminal apparatuses, one or more terminal apparatuses as the second terminal apparatus, where a Uu interface between the candidate terminal apparatus and the network device has good channel quality and low load, and a cooperation link between the first terminal apparatus and the candidate terminal apparatus has good signal quality or a high transmission rate. A frequency band supported by the second terminal apparatus may be used as the first frequency band.

Optionally, in Manner 3, the first terminal apparatus may report delay information between the first terminal apparatus and the second terminal apparatus to the network device. For an implementation, refer to the descriptions in Manner 1.

In Manner 3, the first terminal apparatus and the second terminal apparatus may access a same network device, namely, the network device. In a possible implementation, the cooperation capability information sent by the surrounding terminal device to the first terminal apparatus further includes identifier (ID) information of a network device connected to the surrounding terminal device. After receiving the ID information of the network device sent by the surrounding terminal apparatus, the first terminal apparatus compares the ID information with an ID of a base station or an ID of a cell connected to the first terminal apparatus, and selects a second terminal apparatus that accesses the same network device as the first terminal apparatus.

In the foregoing Manner 1 to Manner 3, if the determined first frequency band of the second terminal apparatus has been configured and is operating, the network device further needs to reconfigure the first frequency band by using the second configuration information, to support the first frequency band in transmission of the first data. If the first frequency band is not configured for the second terminal apparatus, in this case, the network device needs to configure a new component carrier for the second terminal apparatus by using the second configuration information, and the new component carrier corresponds to the first frequency band.

The following describes implementations of the first configuration information and the second configuration information in S101.

In this application, the first configuration information may indicate, to the first terminal apparatus, one or more terminal apparatuses and/or one or more frequency bands of the one or more terminal apparatuses. The one or more terminal apparatuses may assist, on the one or more frequency bands, the first terminal apparatus in transmitting data to the network device.

When the first configuration information indicates one second terminal apparatus, the first configuration information may specifically configure one or more carriers, marked as a CC 2, of the second terminal apparatus, as one or more carriers of the first terminal apparatus, where an operating frequency band of the second terminal apparatus on the CC 2 is the first frequency band. For example, the first configuration information may carry an identifier of the CC 2.

The network device may configure the CC 2 as the carrier of the first terminal apparatus by using the first configuration information in an existing carrier configuration manner. For example, the first configuration information may carry indication information indicating that the CC 2 is a carrier of the second terminal apparatus. For example, the indication information may be 1-bit (bit) indication information, for example, indication information indicating whether the CC 2 is a carrier supported by a terminal apparatus other than the first terminal apparatus.

Because the network device may indicate a plurality of terminal apparatuses and/or a plurality of frequency bands to the first terminal apparatus by using the first configuration information, the first terminal apparatus needs to determine the second terminal apparatus in the plurality of terminal apparatuses and/or determine the first frequency band in the plurality of frequency bands based on the first configuration information.

In a possible implementation, the first configuration information may configure a plurality of terminal apparatuses (or a plurality of terminal apparatuses and operating frequency bands of the plurality of terminal apparatuses) for the first terminal apparatus, to support cooperation transmission of the first terminal apparatus by using the plurality of terminal apparatuses. In this case, the first configuration information may carry identifiers (for example, C-RNTIs and/or group identifiers allocated by the network device) of the plurality of terminal apparatuses, to indicate the plurality of terminal apparatuses configured for the first terminal apparatus. Optionally, the first configuration information may further indicate a terminal apparatus corresponding to the first frequency band, or in other words, indicate a terminal apparatus whose carrier includes the first frequency band.

For example, the network device configures two terminal apparatuses for a SUE by using the first configuration information. The two terminal apparatuses are respectively a CUE 1 and a CUE 2. The network device may carry identifiers of the two terminal apparatuses in the first configuration information. The identifiers may be C-RNTIs of the terminal apparatuses CUE 1 and CUE 2, or temporary identifiers or indexes allocated by a base station to the terminal apparatuses CUE 1 and CUE 2. For example, the first configuration information may carry an index 0 and an index 1, where the index 0 and the index 1 respectively correspond to the CUE 1 and the CUE 2. Correspondingly, the network device may carry the identifier of the second terminal apparatus in the first scheduling information, so that the first terminal apparatus sends data via the second terminal apparatus, and the second terminal apparatus sends the data of the first terminal apparatus to the network device on the first frequency band. In the foregoing example, when the first scheduling information carries the index 0, the SUE may send data to the CUE 1 based on the first scheduling information, and the CUE 1 sends the data of the SUE to the network device on the first frequency band of the CUE 1. In this case, the CUE 1 is the second terminal apparatus, and the first frequency band is an operating frequency band that is of the CUE and that is indicated by the second configuration information.

Optionally, the first configuration information may include a plurality of carriers configured for the first terminal apparatus, and the plurality of carriers correspond to frequency bands supported by one or more terminal apparatuses. In other words, the network device configures one or more carriers of a plurality of cooperation terminal apparatuses to provide cooperation for uplink transmission of the first terminal apparatus. In this case, secondary cell configuration may carry an identifier of one or more terminal apparatuses to which the plurality of carriers belong and/or carry identifiers of the plurality of carriers. For example, if the network device configures a plurality of carriers of a plurality of terminal apparatuses for the first terminal apparatus, the network device may carry an index of a carrier and an identifier of the terminal apparatus in the secondary cell configuration, to indicate the second terminal apparatus from the plurality of terminal apparatuses by using the index of the carrier. If the secondary cell configuration does not carry identifiers of a plurality of terminal apparatuses, the network device may indicate, by using other information in the secondary cell configuration, correspondences between different carrier indexes and terminal apparatuses, so that the first terminal apparatus determines the second terminal apparatus from the plurality of terminal apparatuses. In this way, the network device needs to carry only an index of a carrier when scheduling the carrier, so that the first terminal apparatus can determine the second terminal apparatus corresponding to the scheduling information and a cooperation frequency band of the second terminal apparatus.

For example, the network device configures, for a SUE, two carriers that can be used for cooperation transmission. The two carriers may be carriers of one or more terminal apparatuses. In this case, the first configuration information may carry indexes of the two carriers (or an operating frequency band of the CUE on the carriers). It is assumed that the two terminal apparatuses are respectively a CUE 1 and a CUE 2, and operating carriers of the CUE 1 and the CUE 2 are respectively a CC 1 and a CC 2. In this case, the network device may carry an index 0 in the first configuration information to identify the CUE 1, and carry an index 1 in the first configuration information to identify the CUE 2. When the first scheduling information carries the index 0, the SUE may send data to the CUE 1 based on the first scheduling information, and the CUE 1 sends the data of the SUE to the network device on an operating frequency band corresponding to the CC 1. In this case, the CUE 1 is the second terminal apparatus, and the first frequency band is the operating frequency band of the CUE 1 on the CC 1.

In addition, the first configuration information may alternatively carry identifiers of a plurality of terminal apparatuses and indexes of carriers or operating frequency bands of the plurality of terminal apparatuses. Correspondingly, the first scheduling information may carry the identifier of the second terminal apparatus and an index of the first frequency band. The first terminal apparatus may determine, based on the identifier of the second terminal apparatus and the index of the first frequency band that are carried in the first scheduling information, second terminal apparatuses from the plurality of terminal apparatuses configured by using the first configuration information, and determine the first frequency band from operating frequency bands of the plurality of second terminal apparatuses.

Optionally, the first configuration information may further include an identifier of a carrier CC 1 of the first terminal apparatus, and an operating frequency band of the first terminal apparatus on the CC 1 is the second frequency band. The second frequency band may be used by the first terminal apparatus to perform uplink sending to the network device through an air interface. The first configuration information may be further used to configure the carrier CC 1, for example, may carry physical uplink shared channel (physical uplink shared channel, PUSCH) configuration information, physical downlink control channel (physical downlink control channel, PDCCH) configuration information, or physical uplink control channel (physical uplink control channel, PUCCH) configuration information of the carrier. For example, the first configuration information may configure the carrier CC 1 as a primary carrier of the first terminal apparatus.

Further, optionally, the first configuration information may be further used to configure a carrier CC 2 of the second terminal apparatus. For example, the first configuration information may carry PUSCH configuration information or PDCCH configuration information of the carrier CC 2, and other cell configuration parameter information.

Optionally, the first configuration information may configure a carrier of the first terminal apparatus as the primary carrier, and configure the carrier of the second terminal device as a secondary carrier.

In this application, the PUCCH configuration information may include a PUCCH resource set (PUCCH-resource set), a PUCCH format (format) configuration, a demodulation reference signal (demodulation reference signal, DMRS) configuration, a power control parameter configuration, and/or the like. The PDCCH configuration information may include a control resource set (control-resource set, CORESET) configuration, a search space (search space) configuration, another configuration used for PDCCH detection, and/or the like. The configuration information of the PUSCH may include a configuration of a PUSCH time domain resource allocation manner, a PUCCH format configuration, a DMRS configuration, and/or the like.

Optionally, the first configuration information may be carried in a radio resource control (radio resource control, RRC) message. For example, the first configuration information is carried in an RRC reconfiguration (reconfiguration) message.

A configuration manner of the first frequency band may be as follows:

If the first configuration information is carried in the RRC reconfiguration message, the carrier configuration of the carrier CC 2 may be carried in a secondary cell configuration (SCellConfig) field, or carried in a newly defined field. This is not specifically limited in this application.

If a new field is used, an example of a format of the new field is as follows:

```
            New field : := SEQUENCE{
            SCell configuration
            1
```

The new field may include the following fields:
an identifier of a cell in a cell group; and
information such as parameter configuration of a serving cell.

The new field may further carry the identifier of the second terminal apparatus (or identifiers of a plurality of terminal apparatuses including the second terminal apparatus), and an identifier or the index of the first frequency band (or identifiers or indexes of a plurality of frequency bands including the first frequency band). For details, refer to the foregoing descriptions of the first configuration information and the second configuration information.

Similar to the first configuration information, the second configuration information may be used to configure the first frequency band of the second terminal apparatus. For example, the second configuration information may carry PUSCH configuration information, PDCCH configuration information, or PUCCH configuration information of a CC to which the first frequency band belongs, and another cell configuration parameter.

The second configuration information may further carry indication information indicating that the first frequency band is used for cooperation transmission of the first terminal apparatus. Optionally, the indication information may be 1-bit indication information. Optionally, the second configuration information may further carry an identifier of the first terminal apparatus. The second terminal apparatus may support cooperation transmission for a plurality of first terminal apparatuses. In this case, the second configuration information may carry identifiers of the plurality of first terminal apparatuses or indexes allocated by the network device to the first terminal apparatuses. Alternatively, the network device sends the second configuration information for a plurality of times, and second configuration information sent each time carries an identifier of a unique first terminal apparatus or an index allocated by the network device to a unique first terminal apparatus. For example, the second configuration information may be used to configure a plurality of first frequency bands, each frequency band is used by one or more first terminal apparatuses to perform cooperation transmission, and the plurality of first frequency bands may provide cooperation for a same first terminal apparatus or for different first terminal apparatuses. In addition, in this application, the identifier of the first terminal apparatus may alternatively be a group identifier allocated by the network device to the first terminal apparatus and the second terminal apparatus.

Optionally, the second configuration information may be carried in an RRC message. For example, the second configuration information is carried in an RRC reconfiguration message. If the second configuration information is carried in the RRC reconfiguration message, the second configuration information may carry a secondary cell configuration field. In addition, the identifier of the first terminal apparatus may be further carried in the secondary cell configuration field or a new field.

Before S102, the network device may further send the first scheduling information to the first terminal apparatus, to indicate the first terminal apparatus to send the first data to the second terminal apparatus. For example, the manner in which the first scheduling information indicates the first terminal apparatus to send the first data to the second terminal apparatus includes: for example, carrying, in the first scheduling information, the identifier of the second terminal apparatus and the identifier of the first frequency band or the identifier of the carrier to which the first frequency band belongs that are configured for the first terminal apparatus by using the first configuration information, and sending, by the first terminal apparatus based on the identifier of the second terminal apparatus and the identifier of the first frequency band or the identifier of the carrier to which the first frequency band belongs that are indicated by the first scheduling information, the first data to the second terminal apparatus on a time domain resource indicated by the scheduling information. For another example, when the first configuration information indicates a frequency band of only one cooperation terminal apparatus, the first scheduling information may carry one piece of indication information to indicate the first terminal apparatus to send the first data to the terminal apparatus. In this case, the terminal apparatus indicated by the first configuration information is the second terminal apparatus, and the frequency band indicated by the first configuration information is the first frequency band.

In a possible implementation, the first scheduling information may be further used to schedule the first terminal apparatus to send data to the network device on the second frequency band. For example, the first scheduling information may be downlink control information (download control information, DCI), the DCI may be used to schedule the first terminal apparatus to transmit data on the second frequency band, and the DCI may further include the identifier of the second terminal apparatus and/or the identifier of the first frequency band, to indicate the first terminal apparatus to send the first data to the second terminal apparatus. Optionally, the data sent by the first terminal apparatus on the second frequency band is the same as the first data, so that reliability of uplink transmission is improved.

The network device may further send second scheduling information to the second terminal apparatus, the second scheduling information indicates the second terminal apparatus to send second data to the network device on the first frequency band, and the second data is determined based on the first data sent by the first terminal apparatus to the second terminal apparatus. The first terminal apparatus may send the first data to the second terminal apparatus based on the first scheduling information. Then, the second terminal apparatus obtains the second data based on the first data, and sends the second data to the network device on the first frequency band. In this way, uplink transmission of the data of the first terminal apparatus on the first frequency band in S 102 can be implemented.

In this application, the first data may be TB data sent by the first terminal apparatus, and the second terminal apparatus may send the TB data to the network device on a scheduling resource indicated by the second scheduling information.

Optionally, the first scheduling information and/or the second scheduling information may be DCI for uplink scheduling.

For example, the first scheduling information may include parameter information needed by the first terminal apparatus to perform uplink transmission. The parameter information includes, for example, information such as a carrier identifier of a secondary carrier corresponding to the first frequency band, frequency domain resource allocation information, time domain resource allocation information, a modulation and coding scheme (modulation and coding scheme, MCS) parameter, a new data indicator (new data indicator, NDI), redundancy version (redundancy version, RV) information, or a hybrid automatic repeat request (hybrid automatic repeat request, HARQ) process number.

It should be understood that the network device may determine, based on the delay information between the first terminal apparatus and the second terminal apparatus, scheduling resources respectively indicated by the first scheduling information and the second scheduling information. In this application, to enable the data of the first terminal apparatus to be smoothly sent by the second terminal apparatus to the network device, the network device may determine the scheduling resources respectively indicated by the first scheduling information and the second scheduling information by considering information such as delay information on a link when the first terminal apparatus sends the data to the second terminal apparatus and a processing delay of the second terminal apparatus for the data from the first terminal apparatus. The transmission delay information between the first terminal apparatus and the second terminal apparatus may be reported by the first terminal apparatus and/or the second terminal apparatus. Optionally, the processing delay of the second terminal apparatus may be a preset value, for example, in a scenario in which a connection between the first terminal apparatus and the second terminal apparatus is stable.

Optionally, the second scheduling information may indicate whether the second scheduling information is for scheduling the second data, where the second data may be obtained based on the first data sent by the first scheduling information. For example, the second data may include the first data, or include a part of the first data.

In this application, to enable the second terminal apparatus to learn that the data from the first terminal apparatus is the first data, the network device may carry, in the first scheduling information and the second scheduling information, information for identifying the first data (where for ease of description, the information is referred to as second information below), and the first data may carry the second information.

For example, the first data sent by the first terminal apparatus to the second terminal apparatus may include the TB data and the second information carried in the first scheduling information. When receiving data that carries the second information from the first terminal apparatus, the second terminal apparatus may identify that the data is the first data, to be specific, determine that the second data needs to be sent to the network device based on the data. For example, the second data is the TB data. When the second terminal apparatus identifies, through comparison, the first data that is from the first terminal apparatus and that carries the second information, the second terminal apparatus sends, to the network device on an uplink scheduling resource (UL grant) indicated by the second scheduling information corresponding to the second information, the TB data carried in the processed first data. The "corresponding" means that the second information from the first terminal apparatus matches the second information in the second scheduling information, or in other words, the second information is carried in the second scheduling information, and in this way, the second information corresponds to the uplink scheduling resource indicated by the second scheduling information. This design can improve efficiency of cooperation transmission.

For example, the second information may include HARQ information, for example, at least one of a redundancy version, a HARQ process identifier, or a transport block size (transport block size, TBS). In addition, the second information may alternatively be predefined information, information determined by the first terminal apparatus and the second terminal apparatus by default or through negotiation, or other information such as an identifier (for example, a sequence number (sequence number, SN)) allocated by the network device. This is not specifically limited in this application.

In addition, the second scheduling information may further carry third information. The third information may be 1-bit indication information indicating whether the second scheduling information is for scheduling the data of the first terminal apparatus, or indication information indicating whether scheduled data is data of a terminal apparatus other than the second terminal apparatus. Alternatively, the third information may include the identifier of the first terminal apparatus. In this case, the second terminal apparatus may learn, based on the identifier of the first terminal apparatus, that the second scheduling information is for scheduling the uplink data of the first terminal apparatus.

In addition, if there are a plurality of first terminal apparatuses that support cooperation transmission with the second terminal apparatus, the network device may carry an identifier (or an index) of the first terminal apparatus to the second scheduling information, to indicate a SUE whose data is scheduled this time.

In the foregoing solution, the identifier of the first frequency band or the identifier of the carrier to which the first frequency band belongs is added to the first scheduling information, to indicate that the second terminal apparatus cooperates in uplink transmission of the first terminal apparatus on the first frequency band, and/or the identifier of the first terminal apparatus is carried in the second scheduling information, to indicate that the second terminal apparatus is configured to send the data of the first terminal apparatus to the network device. The following are some other alternative solutions. In these solutions, no additional indication needs to be added to the DCI of the first scheduling information and/or the second scheduling information, that is, an existing format of the DCI does not need to be changed.

### Manner A

The network device scrambles the second scheduling information by using the identifier of the first terminal apparatus. For example, the network device scrambles the second scheduling information by using a C-RNTI of the first terminal apparatus. If the second terminal apparatus can successfully receive the second scheduling information based on the C-RNTI of the first terminal apparatus, it indicates that the second scheduling information is for scheduling the data of the first terminal apparatus.

In Manner A, if the second terminal apparatus performs cooperation transmission for a plurality of first terminal apparatuses, the second terminal apparatus attempts to traverse identifiers of all first terminal apparatuses to attempt to receive and descramble the second scheduling information delivered by the network device, until the second scheduling information is successfully descrambled. In this case, the second scheduling information is for indicating the second terminal apparatus to perform cooperation transmission on the data of the first terminal apparatus corresponding to an identifier used for descrambling.

In this manner, indication information carried in the first scheduling information is the same as that in the solution described above. In other words, the first scheduling information needs to carry the identifier of the second terminal apparatus and/or the identifier of the first frequency band, to indicate the first terminal device to send the first data to the second terminal device.

### Manner B

The network device may allocate a group identifier to each pair of first terminal apparatus and second terminal apparatus that have a coordination relationship. Both the first terminal apparatus and the second terminal apparatus may store the group identifier and a correspondence between an identifier of the first terminal apparatus and an identifier of the second terminal apparatus. For example, it is assumed that the first configuration information and the second configuration information indicate that second terminal apparatuses CUE 1 and CUE 2 may provide cooperation transmission for a first terminal apparatus SUE. In this case, a group identifier group ID 1 may be configured for a cooperation relationship between the CUE 1 and the SUE, and a group identifier group ID 2 may be configured for a cooperation relationship between the CUE 2 and the SUE. Alternatively, allocation of group identifiers may be refined to a carrier granularity. For example, it is assumed that the first configuration information and the second configuration information indicate that a carrier CC1 of a second terminal apparatus CUE 1 and carriers CC 2 and CC 3 of a second terminal apparatus CUE 2 provide cooperation transmission for a first terminal apparatus SUE. In this case, a group identifier group ID 1 may be configured for a cooperation relationship between the CC 1 and the SUE, a group identifier group ID 2 may be configured for a cooperation relationship between the CC 2 and the SUE, and a group identifier group ID 3 may be configured for a cooperation relationship between the CC 3 and the SUE.

Correspondingly, the first configuration information and the second configuration information include the group identifiers. In this case, the group identifiers may be used to distinguish between different terminal apparatuses and/or frequency bands. For example, the group identifier may be an index allocated by the network device.

In Manner B, the network device scrambles the first scheduling information and second scheduling information by using the allocated group identifier. For example, the network device scrambles the first scheduling information and the second scheduling information by using a group identifier of the first terminal apparatus. If the first terminal apparatus can successfully receive the first scheduling information based on a group identifier, and the second terminal apparatus can receive the second scheduling information based on the group identifier, where the group identifier corresponds to a cooperation relationship between the first terminal apparatus and the second terminal apparatus, it indicates that the first scheduling information indicates the first terminal apparatus to send the first data to the second terminal apparatus, and the second scheduling information indicates the second terminal apparatus to send, to the network device, the data sent by the first terminal apparatus to the second terminal apparatus.

According to Manner B, both the first scheduling information and the second scheduling information may use an existing format, no additional indication needs to be added, and only the second scheduling information sent to a CUE needs to be scrambled by using the group identifier, where the CUE may be a CUE 1 or a CUE 2. Optionally, the first scheduling information sent to the SUE may further be scrambled by using the group identifier, and the SUE may be a SUE 1, a SUE 2, or a SUE 3.

Similarly, each first terminal may be configured with a plurality of second terminals to perform cooperation data transmission for the first terminal, or each second terminal may perform cooperation data transmission for a plurality of first terminals. In this case, the first terminal apparatus descrambles the first scheduling information by traversing group identifiers configured in the first configuration information, and the second terminal apparatus descrambles the second scheduling information by traversing group identifiers configured in the first configuration information.

### Manner C

The network device sends the second scheduling information to the second terminal apparatus via the first terminal apparatus. Therefore, the second terminal apparatus may learn that a scheduling resource indicated by the second scheduling information is for transmitting the data of the first terminal apparatus. In this manner, the first terminal apparatus may obtain the first scheduling information and the second scheduling information from the network device, and the second terminal apparatus may obtain the second scheduling information from the first terminal apparatus.

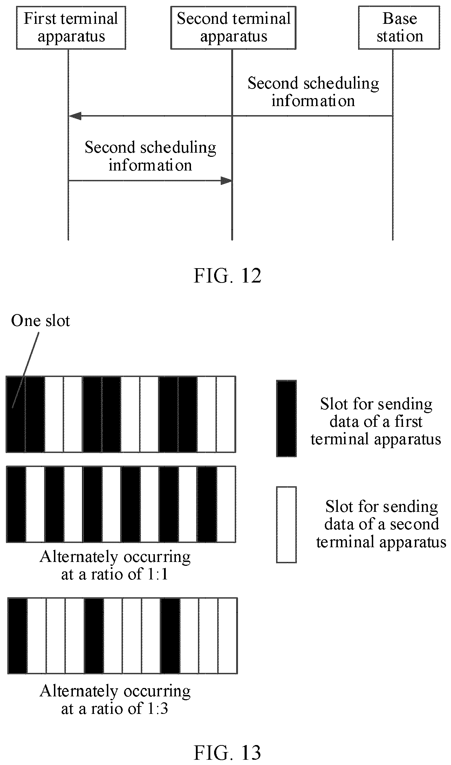

For example, as shown in FIG. 12, the network device may send the second scheduling information to the first terminal apparatus. The second scheduling information may include indication information, to indicate that the second scheduling information is for scheduling cooperation transmission, or indicate that the scheduling resource indicated by the second scheduling information is for transmitting the data of the first terminal apparatus. For example, the indication information may include the identifier of the second terminal apparatus and/or information about the first frequency band. The first terminal apparatus receives the second scheduling information, learns, based on the indication information, that the scheduling resource indicated by the second scheduling information is for transmitting the data of the first terminal apparatus, and forwards the second scheduling information to the second terminal apparatus. Alternatively, similar to Manner B, the first terminal apparatus may successfully receive the second scheduling information by using a group identifier, and send the second scheduling information to a second terminal apparatus corresponding to the group identifier. Further, the first terminal apparatus may further indicate the information about the first frequency band of the second terminal apparatus based on the group identifier.

In this application, the second terminal apparatus may send, on the first frequency band in a time division multiplexing (time-division multiplexing, TDM) manner, the data sent by the first terminal apparatus through a cooperation link and data of the second terminal apparatus, to avoid a conflict between forwarding data and data scheduling of the second terminal apparatus. In other words, a time domain resource used by the second terminal apparatus to send the data of the first terminal apparatus on the first frequency band is different from a time domain resource used by the second terminal apparatus to send the data of the second terminal apparatus on the first frequency band.

In the foregoing possible manners, the scheduling information delivered by the network device may be used to flexibly indicate the time domain resource used by the second terminal apparatus to forward the data of the first terminal apparatus and a time domain resource used to send the data of the second terminal apparatus.

### Manner D

Manner D is another manner in which a fixed time division multiplexing mode is used to indicate the second terminal apparatus to perform cooperation transmission. Compared with the foregoing manners, this manner has lower flexibility, but no additional indication information needs to be added to the scheduling information, that is, a quantity of bytes of DCI can be reduced, and scheduling information delivered by a base station to a terminal apparatus can be further reduced. Therefore, overheads of monitoring and descrambling the scheduling information by the first terminal apparatus and the second terminal apparatus can be reduced.

In Manner D, the network device may preconfigure a time division duplex (time division duplexing, TDD) transmission manner of the first data of the first terminal apparatus and the data of the second terminal apparatus, and send a time division multiplexing indication to the second terminal apparatus via a reconfiguration message (for example, a reconfiguration message that carries the second configuration information) in a reconfiguration process. The time division multiplexing indication may be used to indicate an allocation manner of a time domain resource that can be used to carry the cooperation data and a time domain resource that can be used to carry the data of the second terminal apparatus that are in the first frequency band. Therefore, when the first terminal apparatus needs to perform cooperation data transmission, the network device indicates, by using the first scheduling information, the first terminal apparatus to send the first data to the second terminal apparatus, and further indicates, by using the indication information, the second terminal apparatus to use the configured time division duplex (time division duplexing, TDD) transmission manner to transmit the cooperation data or the data of the second terminal apparatus. In other words, the time domain resource for the first data may be determined from the time domain resource for carrying the cooperation data, and when the data of the second terminal apparatus needs to be sent, the second terminal apparatus may determine the time domain resource for the data of the second terminal apparatus from the time domain resource for carrying the data of the second terminal apparatus.

The time division multiplexing indication may indicate a TDM pattern (pattern). As shown in FIG. 13, the TDM pattern may indicate a slot that is of the second terminal apparatus and that is for sending the data of the first terminal apparatus, and indicate a slot that is of the second terminal apparatus and that is for sending the data of the second terminal apparatus. In this case, the time division multiplexing indication may include a bitmap, and a value of each bit in the bitmap may indicate whether a slot corresponding to the bit is used to send the data from the first terminal apparatus or used to send the data of the second terminal apparatus. It should be understood that in actual application, the slot herein may alternatively be replaced with a time unit. The time unit may be a slot, a symbol, or a combination of a plurality of slots and/or symbols.

As shown in FIG. 13, in a TDM pattern, slots for sending the data of the first terminal apparatus and slots for sending the data of the second terminal apparatus may alternately occur at a ratio of 1:1. For example, x slots for sending the data of the first terminal apparatus and x slots for sending the data of the second terminal apparatus alternately occur, where x is a positive integer. Alternatively, slots for sending the data of the first terminal apparatus and slots for sending the data of the second terminal apparatus may occur alternately at a ratio of 1:y or y: 1, where y is a positive integer greater than 1. In addition, although not shown in FIG. 13, the slots for sending the data of the first terminal apparatus and the slots for sending the data of the second terminal apparatus may alternatively be arranged aperiodically.

For example, a plurality of TDM patterns and numbers of the TDM patterns may be predefined in a protocol, or predefined in a preconfiguration manner, or the network device indicates the plurality of TDM patterns and the numbers of the TDM patterns. In different TDM patterns, the slots for sending the data of the first terminal apparatus and the slots for sending the data of the second terminal apparatus are arranged in different manners. For example, between any two TDM patterns, alternating ratios of the slots for sending the data of the first terminal apparatus to the slots for sending the data of the second terminal apparatus are different; and/or quantities of consecutive slots for sending the data of the first terminal apparatus are different; and/or quantities of consecutive slots for sending the data of the second terminal apparatus are different. Further, the network device may further indicate, by using a message (for example, DCI) carrying a number of a TDM pattern, the second terminal apparatus to send the data of the first terminal apparatus and the data of the second terminal apparatus based on a slot indicated by the corresponding TDM pattern.

In Manner D, the network device may send a time division multiplexing indication to the second terminal apparatus when the data of the first terminal apparatus needs to be transmitted by the second terminal apparatus, or may send a time division multiplexing indication after determining that the first frequency band of the second terminal apparatus is for transmitting the data of the first terminal apparatus. The time division multiplexing indication may be carried in the second scheduling information. Alternatively, a time division multiplexing pattern may be preset or defined in a protocol, to reduce signaling overheads. After determining that the data of the first terminal apparatus needs to be transmitted by the second terminal apparatus, or after determining that the first frequency band of the second terminal apparatus is for transmitting the data of the first terminal apparatus, the network device sends enable (enable) information of the time division multiplexing indication to the second terminal apparatus. If there are a plurality of time division multiplexing indications that are preset or defined in the protocol, the enable information may carry an index of an enabled time division multiplexing indication in the plurality of time division multiplexing indications. Similarly, if the time division multiplexing indication is preset, the network device may further send disable (disable) information to the second terminal apparatus, to indicate the second terminal apparatus that the first frequency band is for transmitting only the data of the first terminal apparatus. In this case, the second terminal apparatus disables the previously enabled time division multiplexing indication.

Optionally, the time division multiplexing indication may be carried in signaling such as an RRC message (including but not limited to an RRC reconfiguration message), DCI, or a MAC CE. This is not limited in this application.

When the first terminal apparatus performs handover and after the first terminal apparatus is handed over, uplink cooperation transmission needs to be re-established under the target network device. In this case, a cooperation link may be quickly established in the following manner, and cooperation transmission is performed:

If the target network device completely determines the first frequency band of the second terminal apparatus and establishes the cooperation link, the first terminal apparatus first obtains an identifier of a surrounding terminal apparatus and information about a frequency band supported by the surrounding terminal apparatus, including an identifier of a terminal apparatus served by the target network device and information about a frequency band supported by the terminal apparatus. In a handover scenario, the network device serving the first terminal apparatus may trigger measurement reporting of the first terminal apparatus by delivering a measurement configuration, and determine, based on measurement report information of the first terminal apparatus, whether to perform handover of the first terminal apparatus.

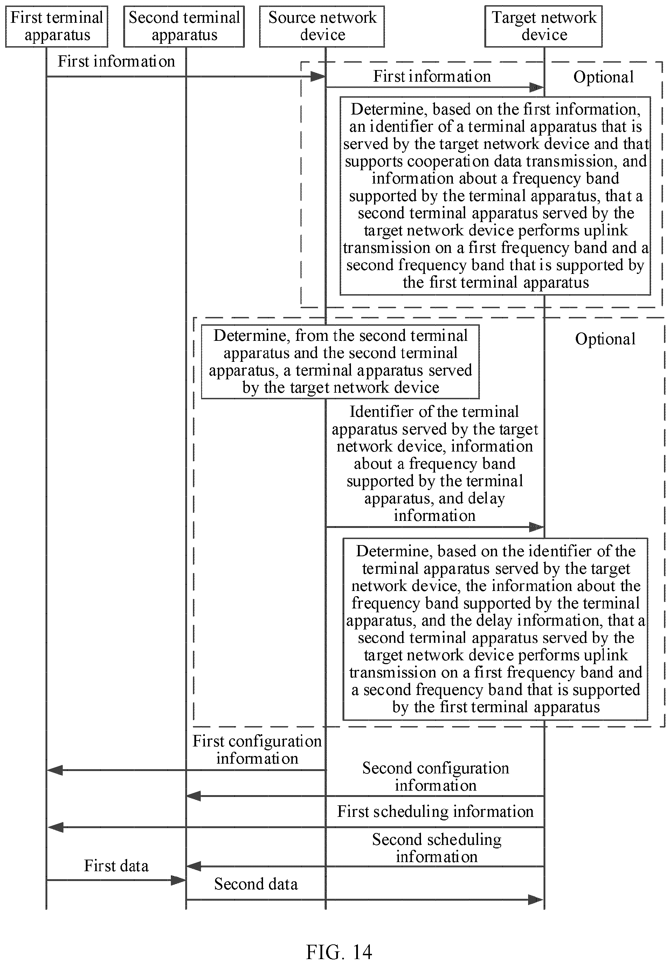

Refer to the foregoing Manner 1. In a possible implementation, as shown in FIG. 14, a source network device of the first terminal apparatus may send the first information to the target network device of the first terminal apparatus after determining that the first terminal apparatus performs cell handover. The first information may include information about a frequency band combination supported by the first terminal apparatus, the identifier of the second terminal apparatus and information about a frequency band supported by the second terminal apparatus, an identifier of a third terminal apparatus and information about a frequency band supported by the third terminal apparatus, delay information between the first terminal apparatus and the second terminal apparatus, or delay information between the first terminal apparatus and the third terminal apparatus. For example, the source network device may carry the first information in a handover request (handover request). The second terminal apparatus and the third terminal apparatus are terminal apparatuses surrounding the first terminal apparatus, but a network device serving the second terminal apparatus and the third terminal apparatus is not limited to the target network device.

Optionally, the target network device may obtain an identifier of a terminal apparatus that is served by the target network device and that supports cooperation data transmission, and information about a frequency band supported by the terminal apparatus, so that the target network device can determine, based on the first information, the identifier of the terminal apparatus that is served by the target network device and that supports cooperation data transmission, and the information about the frequency band supported by the terminal apparatus, that a second terminal apparatus served by the target network device performs uplink transmission on the first frequency band and a second frequency band that is supported by the first terminal apparatus.

Alternatively, the source network device may determine, from the second terminal apparatus and the second terminal apparatus that are reported by the first terminal apparatus, a terminal apparatus served by the target network device, and send identifiers of terminal apparatuses (including the second terminal apparatus) served by the target network device, information about frequency bands supported by the terminal apparatuses, and delay information between the first terminal apparatus and the terminal apparatuses to the target network device. Therefore, the target network device can determine, based on the information about the frequency band combination supported by the first terminal apparatus, the identifiers of the plurality of terminal apparatuses served by the target network device, the information about the frequency bands supported by the terminal apparatuses, and the delay information between the first terminal apparatus and the terminal apparatuses, that the second terminal apparatus served by the target network device performs uplink transmission on the first frequency band and the second frequency band that is supported by the first terminal apparatus. For example, the source network device may alternatively carry, in the handover request, cooperation capability information of a terminal apparatus served by the target network device. The cooperation capability information may include an identifier of the terminal apparatus and information about a frequency band supported by the terminal apparatus. The cooperation capability information may further include uplink transmission channel quality of the terminal apparatus, service load information of the terminal apparatus, or the like, and is used as reference information for the target network device to select the second terminal apparatus. Optionally, the cooperation capability information may further include an identifier of a network device connected to the terminal apparatus. Therefore, the source network device may determine, based on the identifier of the target network device, the identifier of the network device connected to the second terminal apparatus, and an identifier of a network device connected to the third terminal apparatus, the terminal apparatus served by the target network device.

For a manner in which the first terminal apparatus obtains the cooperation capability information of the surrounding terminal apparatus, refer to the descriptions in Manner 1. For the cooperation capability information, refer to the descriptions in Manner 1.

In another possible implementation, in a manner in which the target network device determines the first frequency band of the second terminal apparatus, the first terminal apparatus may selectively report a surrounding terminal apparatus that can be used for data cooperation. For example, the first terminal apparatus selects, based on cooperation capability information of the surrounding terminal apparatus, a terminal apparatus that satisfies a frequency band combination supported by the first terminal apparatus for reporting.

Refer to Manner 2. For example, the first terminal apparatus may send at least one of the following information to the source network device, the source network device sends the received information to the target network device, and the target network device determines, based on the received information, that the second terminal apparatus performs uplink transmission on the first frequency band and the second frequency band that is supported by the first terminal apparatus: the identifier of the second terminal device and information about a frequency band supported by the second terminal device, an identifier of a third terminal device and information about a frequency band supported by the third terminal device, delay information between the first terminal device and the second terminal device, or delay information between the first terminal device and the third terminal device. The second terminal apparatus and the third terminal apparatus are not limited to terminal apparatuses connected to the target network device. The second terminal apparatus and the third terminal apparatus are surrounding terminal apparatuses determined by the first terminal apparatus based on the information about the frequency band combination supported by the first terminal apparatus. For the determining manner, refer to manner 2. Details are not described herein again.

The target network device may determine, based on the received information, the identifier of the terminal apparatus that is served by the target network device and that supports cooperation data transmission, and the information about the frequency band supported by the terminal apparatus, that the second terminal apparatus served by the target network device performs uplink transmission on the first frequency band and the second frequency band that is supported by the first terminal apparatus. For a specific implementation, refer to the foregoing descriptions.

Alternatively, the source network device may determine, from the second terminal apparatus and the third terminal apparatus based on the foregoing received information, terminal apparatuses served by the target network device, and send identifiers of the terminal apparatuses and information about frequency bands supported by the terminal apparatuses to the target network device. Optionally, the source network device may further send delay information between the first terminal apparatus and the terminal apparatuses served by the target network device to the target network device, so that the target network device determines that the second terminal apparatus served by the target network device performs uplink transmission on the first frequency band and the second frequency band that is supported by the first terminal apparatus. For a manner in which the source network device determines the terminal apparatus served by the target network device, refer to the foregoing descriptions.

It should be understood that, in a scenario in which the first terminal apparatus performs handover, the source network device sends the first configuration information to the first terminal apparatus. After the target network device determines that the second terminal apparatus performs uplink transmission on the first frequency band and the second frequency band that is supported by the first terminal apparatus, the target network device may indicate, to the source network device, that the second terminal apparatus performs uplink transmission on the first frequency band and the second frequency band that is supported by the first terminal apparatus. Therefore, the source network device may send the first configuration information shown in this application to the first terminal apparatus. For example, the target network device may indicate, to the source network device via handover request acknowledge information (handover request ACK), the second terminal apparatus and/or the first frequency band, or indicate that the second terminal apparatus performs uplink transmission on the first frequency band and the second frequency band that is supported by the first terminal apparatus, or indicate that the source network device sends the first configuration information. In addition, the target network device may further send the second configuration information shown in this application to the second terminal apparatus.

It should be understood that, in this application, the handover request acknowledge information sent by the target network device to the source network device may carry configuration information needed for handover to the target network device. Therefore, the source network device may send the configuration information to the first terminal apparatus, and the first terminal apparatus accesses the target network device. Optionally, the first terminal apparatus may initiate random access (random access, RA) to the target network device.

Optionally, the target network device is further configured to: after the first terminal apparatus is handed over, send the first scheduling information shown in this application to the first terminal apparatus, and send the second scheduling information shown in this application to the second terminal apparatus. A subsequent process in which the target network device schedules the first terminal apparatus and the second terminal apparatus to perform data transmission is similar to the process in the foregoing non-handover scenario. Details are not described herein again. For example, as shown in FIG. 14, after receiving the first scheduling information, the first terminal apparatus may send the first data to the second terminal apparatus, and the second terminal apparatus sends the second data to the target network device on the first frequency band.

Based on the descriptions in the foregoing part of method embodiments, in the communication method provided in this application, the second terminal apparatus can cooperate in the uplink transmission of the first terminal apparatus in the handover or non-handover scenario, to improve uplink performance.

Based on the same inventive concept, an embodiment of this application further provides a communication apparatus configured to implement the foregoing functions implemented by the first terminal apparatus, the second terminal apparatus, and/or the network device. The apparatus may include the structure shown in FIG. 8 and/or FIG. 9.

For example, when implementing the actions of the first terminal apparatus in embodiments of this application, the transceiver module 820 or the transceiver unit 910 may be configured to receive first configuration information from the network device, where the first configuration information indicates an identifier of the second terminal apparatus and information about a first frequency band, and the first frequency band is a frequency band supported by the second terminal apparatus. The transceiver module 820 or the transceiver unit 910 may be further configured to transmit uplink data to the network device on the first frequency band and a second frequency band that is supported by the first terminal apparatus.

In a possible design, the transceiver module 820 or the transceiver unit 910 may be further configured to send the identifier of the second terminal apparatus, information about a frequency band combination supported by the first terminal apparatus, and/or the information about the first frequency band to the network device.

In a possible design, the transceiver module 820 or the transceiver unit 910 may be further configured to send delay information between the first terminal apparatus and the second terminal apparatus to the network device.

In a possible design, the transceiver module 820 or the transceiver unit 910 may be further configured to send the first information in this application to the network device.

In a possible design, the transceiver module 820 or the transceiver unit 910 may be further configured to receive the identifier of the second terminal apparatus and/or the information about the frequency band supported by the second terminal apparatus from the second terminal apparatus.

In a possible design, the transceiver module 820 or the transceiver unit 910 may be further configured to receive first scheduling information from the network device, where the first scheduling information indicates the first terminal apparatus to send first data to the second terminal apparatus. The transceiver module 820 or the transceiver unit 910 may be further configured to send the first data to the second terminal apparatus, where the first data is to be sent to the network device on the first frequency band.

When implementing the actions of the second terminal apparatus in embodiments of this application, the transceiver module 820 or the transceiver unit 910 may be configured to receive second configuration information from a network device, where the second configuration information is for configuring a first frequency band supported by the second terminal apparatus. The transceiver module 820 or the transceiver unit 910 may be further configured to perform uplink data transmission on the first frequency band and a second frequency band that is supported by the first terminal apparatus.

In a possible design, the transceiver module 820 or the transceiver unit 910 may be further configured to send an identifier of the second terminal apparatus and/or information about a frequency band supported by the second terminal apparatus to the first terminal apparatus.

In a possible design, the transceiver module 820 or the transceiver unit 910 may be further configured to receive second scheduling information from the network device, where the second scheduling information indicates the second terminal apparatus to send second data to the network device on the first frequency band, the second data is determined based on first data, and the first data is sent by the first terminal apparatus to the second terminal apparatus. The transceiver module 820 or the transceiver unit 910 may be further configured to send the second data to the network device on the first frequency band.

When implementing the actions of the network device in embodiments of this application, the transceiver module 820 or the transceiver unit 910 may be configured to send first configuration information to the first terminal apparatus, where the first configuration information indicates an identifier of the second terminal apparatus and information about a first frequency band, and the first frequency band is a frequency band supported by the second terminal apparatus. The transceiver module 820 or the transceiver unit 910 may be further configured to send second configuration information to the second terminal apparatus, where the second configuration information is for configuring the first frequency band supported by the second terminal apparatus. The transceiver module 820 or the transceiver unit 910 may be further configured to receive, from the first terminal apparatus, data sent in uplink data transmission performed on the first frequency band supported by the second terminal device and a second frequency band supported by the first terminal apparatus.

In a possible design, the transceiver module 820 or the transceiver unit 910 may be further configured to receive the identifier of the second terminal apparatus, information about a frequency band combination supported by the first terminal apparatus, and/or the information about the first frequency band from the first terminal apparatus.

In a possible design, the transceiver module 820 or the transceiver unit 910 may be further configured to receive first information from the first terminal apparatus; and the transceiver module 820 or the transceiver unit 910 may be further configured to determine, based on the first information, that the first terminal apparatus transmits uplink data to the network device on the first frequency band and the second frequency band.

In a possible design, the transceiver module 820 or the transceiver unit 910 may be further configured to send first scheduling information to the first terminal apparatus, where the first scheduling information indicates the first terminal apparatus to send first data to the second terminal apparatus. The transceiver module 820 or the transceiver unit 910 may be further configured to send second scheduling information to the second terminal apparatus, where the second scheduling information indicates the second terminal apparatus to send second data to the network device on the first frequency band, the second data is determined based on the first data, and the first data is sent by the first terminal apparatus to the second terminal apparatus. The transceiver module 820 or the transceiver unit 910 may be further configured to receive the second data from the second terminal apparatus.

In a possible design, the transceiver module 820 or the transceiver unit 910 may be further configured to receive third data sent by the second terminal apparatus on the first frequency band, where the third data is data of the second terminal apparatus, and a time domain resource of the third data is different from a time domain resource of the second data.

An embodiment of this application further provides a communication system. The communication system may include the first terminal apparatus, the second terminal apparatus, and/or the network device in the foregoing embodiments. Optionally, the communication system may have any one of the structures shown in FIG. 1 and FIG. 2(a) to FIG. 2(d). The communication apparatus may be configured to implement the steps implemented by the first terminal apparatus, the second terminal apparatus, and/or the network device in the communication method shown in FIG. 10 to FIG. 12 or FIG. 14.

An embodiment of this application further provides a computer-readable storage medium. The computer-readable storage medium is configured to store a computer program. When the computer program is executed by a computer, the computer may implement the procedures related to the first terminal apparatus, the second terminal apparatus, and/or the network device in the embodiments shown in FIG. 10 to FIG. 12 or FIG. 14 provided in the foregoing method embodiments.

An embodiment of this application further provides a computer program product. The computer program product is configured to store a computer program. When the computer program is executed by a computer, the computer may implement the procedures related to the first terminal apparatus, the second terminal apparatus, and/or the network device in the embodiments shown in FIG. 10 to FIG. 12 or FIG. 14 provided in the foregoing method embodiments.

An embodiment of this application further provides a chip or a chip system (or a circuit). The chip may include a processor. The processor may be configured to invoke a program or instructions in a memory, to perform the procedures related to the first terminal apparatus, the second terminal apparatus, and/or the network device in the embodiments shown in FIG. 10 to FIG. 12 or FIG. 14 provided in the foregoing method embodiments. The chip system may include the chip, and may further include another component such as a memory or a transceiver.

It may be understood that the processor in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium, and can write information into the storage medium, it is clear that the storage medium may alternatively be a component of the processor. The processor and the storage medium may be disposed in an ASIC. In addition, the ASIC may be located in the first terminal apparatus and/or the second terminal apparatus. It is clear that the processor and the storage medium may alternatively exist in the network device or the terminal device as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of' means two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A communication method, comprising:
receiving, by a first terminal apparatus, first configuration information from a network device, wherein the first configuration information indicates an identifier of a second terminal apparatus and information about a first frequency band, and the first frequency band is a frequency band supported by the second terminal apparatus; and
transmitting, by the first terminal apparatus, uplink data to the network device on the first frequency band and a second frequency band that is supported by the first terminal apparatus.

2. The method according to claim 1, further comprising:
sending, by the first terminal apparatus, the identifier of the second terminal apparatus, information about a frequency band combination supported by the first terminal apparatus, and/or the information about the first frequency band to the network device.

3. The method according to claim 2, further comprising:
sending, by the first terminal apparatus, delay information between the first terminal apparatus and the second terminal apparatus to the network device.

4. The method according to claim 1, further comprising:
sending, by the first terminal apparatus, first information to the network device, wherein the first information comprises at least one of the following: information about a frequency band combination supported by the first terminal apparatus, the identifier of the second terminal apparatus and information about a frequency band supported by the second terminal apparatus, an identifier of a third terminal apparatus and information about a frequency band supported by the third terminal apparatus, delay information between the first terminal apparatus and the second terminal apparatus, or delay information between the first terminal apparatus and the third terminal apparatus, wherein the frequency band supported by the second terminal apparatus comprises the first frequency band.

5. The method according to any one of claims 2 to 4, further comprising:
receiving, by the first terminal apparatus, the identifier of the second terminal apparatus and/or the information about the frequency band supported by the second terminal apparatus from the second terminal apparatus, wherein the frequency band supported by the second terminal apparatus comprises the first frequency band.

6. The method according to any one of claims 1 to 5, wherein the method further comprises:
receiving, by the first terminal apparatus, first scheduling information from the network device, wherein the first scheduling information indicates the first terminal apparatus to send first data to the second terminal apparatus; and
the transmitting, by the first terminal apparatus, uplink data to the network device on the first frequency band comprises:
sending, by the first terminal apparatus, the first data to the second terminal apparatus, wherein the first data is to be sent to the network device on the first frequency band.

7. The method according to claim 6, wherein the first scheduling information comprises the identifier of the second terminal apparatus and/or an identifier of the first frequency band.

8. The method according to claim 6 or 7, wherein the first data comprises information for identifying the first data.

9. The method according to claim 8, wherein the information for identifying the first data corresponds to second scheduling information, the second scheduling information indicates the second terminal apparatus to send second data to the network device on the first frequency band, and the second data is determined based on the first data.

10. The method according to claim 9, wherein the first scheduling information and the second scheduling information both comprise the information for identifying the first data.

11. The method according to any one of claims 1 to 10, wherein the first configuration information comprises the identifier of the second terminal apparatus and/or the identifier of the first frequency band.

12. A communication method, comprising:
receiving, by a second terminal apparatus, second configuration information from a network device, wherein the second configuration information is for configuring a first frequency band supported by the second terminal apparatus; and
performing, by the second terminal apparatus, uplink data transmission on the first frequency band and a second frequency band that is supported by a first terminal apparatus, to send data of the first terminal apparatus to the network device.

13. The method according to claim 12, further comprising:
sending, by the second terminal apparatus, an identifier of the second terminal apparatus and/or information about a frequency band supported by the second terminal apparatus to the first terminal apparatus, wherein the frequency band supported by the second terminal apparatus comprises the first frequency band.

14. The method according to claim 12 or 13, further comprising:
receiving, by the second terminal apparatus, second scheduling information from the network device, wherein the second scheduling information indicates the second terminal apparatus to send second data to the network device on the first frequency band, the second data is determined based on first data, and the first data is sent by the first terminal apparatus to the second terminal apparatus; and
the performing, by the second terminal apparatus, uplink data transmission on the first frequency band and a second frequency band that is supported by a first terminal apparatus comprises:
sending, by the second terminal apparatus, the second data to the network device on the first frequency band.

15. The method according to claim 14, wherein the first data comprises information for identifying the first data.

16. The method according to claim 15, wherein the information for identifying the first data corresponds to the second scheduling information.

17. The method according to claim 16, wherein first scheduling information and the second scheduling information both comprise the information for identifying the first data.

18. The method according to any one of claims 14 to 17, further comprising:
sending, by the second terminal apparatus, third data on the first frequency band, wherein the third data is data of the second terminal apparatus, and a time domain resource of the third data is different from a time domain resource of the second data.

19. A communication method, comprising:
sending, by a network device, first configuration information to a first terminal apparatus, wherein the first configuration information indicates an identifier of a second terminal apparatus and information about a first frequency band, and the first frequency band is a frequency band supported by the second terminal apparatus;
sending, by the network device, second configuration information to the second terminal apparatus, wherein the second configuration information is for configuring the first frequency band supported by the second terminal apparatus; and
receiving, by the network device from the first terminal apparatus, data sent in uplink data transmission performed on the first frequency band supported by the second terminal device and a second frequency band supported by the first terminal apparatus.

20. The method according to claim 19, further comprising:
receiving, by the network device, the identifier of the second terminal apparatus, information about a frequency band combination supported by the first terminal apparatus, and/or the information about the first frequency band from the first terminal apparatus.

21. The method according to claim 19, further comprising:
receiving, by the network device, delay information between the first terminal apparatus and the second terminal apparatus from the first terminal apparatus.

22. The method according to claim 19, further comprising:
receiving, by the network device, first information from the first terminal apparatus; and
determining, by the network device based on the first information, that the first terminal apparatus transmits uplink data to the network device on the first frequency band and the second frequency band, wherein
the first information comprises at least one of the following: information about a frequency band combination supported by the first terminal apparatus, the identifier of the second terminal apparatus and information about a frequency band supported by the second terminal apparatus, an identifier of a third terminal apparatus and information about a frequency band supported by the third terminal apparatus, delay information between the first terminal apparatus and the second terminal apparatus, or delay information between the first terminal apparatus and the third terminal apparatus, wherein the frequency band supported by the second terminal apparatus comprises the first frequency band.

23. The method according to any one of claims 19 to 22, wherein the method further comprises:
sending, by the network device, first scheduling information to the first terminal apparatus, wherein the first scheduling information indicates the first terminal apparatus to send first data to the second terminal apparatus; and
sending, by the network device, second scheduling information to the second terminal apparatus, wherein the second scheduling information indicates the second terminal apparatus to send second data to the network device on the first frequency band, the second data is determined based on the first data, and the first data is sent by the first terminal apparatus to the second terminal apparatus; and
the receiving, by the network device from the first terminal apparatus, data sent in uplink data transmission performed on the first frequency band supported by the second terminal device and a second frequency band supported by the first terminal apparatus comprises:
receiving, by the network device, the second data from the second terminal apparatus.

24. The method according to claim 23, wherein the first scheduling information comprises the identifier of the second terminal apparatus and/or an identifier of the first frequency band.

25. The method according to claim 23 or 24, further comprising:
receiving, by the network device, third data sent by the second terminal apparatus on the first frequency band, wherein the third data is data of the second terminal apparatus, and a time domain resource of the third data is different from a time domain resource of the second data.

26. The method according to any one of claims 21 to 23, wherein the first scheduling information and the second scheduling information both comprise information for identifying the first data.

27. The method according to any one of claims 19 to 26, wherein the first configuration information comprises the identifier of the second terminal apparatus and/or the identifier of the first frequency band.

28. A communication apparatus, comprising:
a receiving module, configured to receive first configuration information from a network device, wherein the first configuration information indicates an identifier of a second terminal apparatus and information about a first frequency band, and the first frequency band is a frequency band supported by the second terminal apparatus; and
a sending module, configured to transmit uplink data to the network device on the first frequency band and a second frequency band that is supported by a first terminal apparatus.

29. The apparatus according to claim 28, wherein the sending module is further configured to:
send the identifier of the second terminal apparatus, information about a frequency band combination supported by the first terminal apparatus, and/or the information about the first frequency band to the network device.

30. The apparatus according to claim 29, wherein the sending module is further configured to:
send delay information between the first terminal apparatus and the second terminal apparatus to the network device.

31. The apparatus according to claim 28, wherein the sending module is further configured to:
send first information to the network device, wherein the first information comprises at least one of the following: information about a frequency band combination supported by the first terminal apparatus, the identifier of the second terminal apparatus and information about a frequency band supported by the second terminal apparatus, an identifier of a third terminal apparatus and information about a frequency band supported by the third terminal apparatus, delay information between the first terminal apparatus and the second terminal apparatus, or delay information between the first terminal apparatus and the third terminal apparatus, wherein the frequency band supported by the second terminal apparatus comprises the first frequency band.

32. The apparatus according to any one of claims 28 to 31, wherein the receiving module is further configured to:
receive the identifier of the second terminal apparatus and/or the information about the frequency band supported by the second terminal apparatus from the second terminal apparatus, wherein the frequency band supported by the second terminal apparatus comprises the first frequency band.

33. The apparatus according to any one of claims 28 to 32, wherein the receiving module is further configured to:
receive first scheduling information from the network device, wherein the first scheduling information indicates the first terminal apparatus to send first data to the second terminal apparatus; and
the sending module is specifically configured to:
send the first data to the second terminal apparatus, wherein the first data is to be sent to the network device on the first frequency band.

34. The apparatus according to claim 33, wherein the first scheduling information comprises the identifier of the second terminal apparatus and/or an identifier of the first frequency band.

35. The apparatus according to claim 33 or 34, wherein the first data comprises information for identifying the first data.

36. The apparatus according to claim 35, wherein the information for identifying the first data corresponds to second scheduling information, the second scheduling information indicates the second terminal apparatus to send second data to the network device on the first frequency band, and the second data is determined based on the first data.

37. The apparatus according to claim 36, wherein the first scheduling information and the second scheduling information both comprise the information for identifying the first data.

38. The apparatus according to any one of claims 28 to 37, wherein the first configuration information comprises the identifier of the second terminal apparatus and/or the identifier of the first frequency band.

39. A communication apparatus, comprising:
a receiving module, configured to receive second configuration information from a network device, wherein the second configuration information is for configuring a first frequency band supported by the second terminal apparatus; and
a sending module, configured to perform, by the second terminal apparatus, uplink data transmission on the first frequency band and a second frequency band that is supported by a first terminal apparatus, to send data of the first terminal apparatus to the network device.

40. The apparatus according to claim 39, wherein the sending module is further configured to:
send an identifier of the second terminal apparatus and/or information about a frequency band supported by the second terminal apparatus to the first terminal apparatus, wherein the frequency band supported by the second terminal apparatus comprises the first frequency band.

41. The apparatus according to claim 39 or 40, wherein the receiving module is further configured to:
receive second scheduling information from the network device, wherein the second scheduling information indicates the second terminal apparatus to send second data to the network device on the first frequency band, the second data is determined based on first data, and the first data is sent by the first terminal apparatus to the second terminal apparatus; and
the sending module is specifically configured to:
send the second data to the network device on the first frequency band.

42. The apparatus according to claim 41, wherein the first data comprises information for identifying the first data.

43. The apparatus according to claim 42, wherein the information for identifying the first data corresponds to the second scheduling information.

44. The apparatus according to claim 43, wherein first scheduling information and the second scheduling information both comprise the information for identifying the first data.

45. The apparatus according to any one of claims 41 to 44, wherein the sending module is further configured to:
send third data on the first frequency band, wherein the third data is data of the second terminal apparatus, and a time domain resource of the third data is different from a time domain resource of the second data.

46. A communication apparatus, comprising:
a sending module, configured to send first configuration information to a first terminal apparatus, wherein the first configuration information indicates an identifier of a second terminal apparatus and information about a first frequency band, and the first frequency band is a frequency band supported by the second terminal apparatus, wherein
the sending module is further configured to send second configuration information to the second terminal apparatus, wherein the second configuration information is for configuring the first frequency band supported by the second terminal apparatus; and
a receiving module, configured to receive, from the first terminal apparatus, data sent in uplink data transmission performed on the first frequency band supported by the second terminal device and a second frequency band supported by the first terminal apparatus.

47. The apparatus according to claim 46, wherein the receiving module is further configured to:
receive the identifier of the second terminal apparatus, information about a frequency band combination supported by the first terminal apparatus, and/or the information about the first frequency band from the first terminal apparatus.

48. The apparatus according to claim 46, wherein the receiving module is further configured to:
receive delay information between the first terminal apparatus and the second terminal apparatus from the first terminal apparatus.

49. The apparatus according to claim 46, wherein the receiving module is further configured to:
receive first information from the first terminal apparatus; and
the apparatus further comprises a processing module, configured to:
determine, based on the first information, that the first terminal apparatus transmits uplink data to a network device on the first frequency band and the second frequency band, wherein
the first information comprises at least one of the following: information about a frequency band combination supported by the first terminal apparatus, the identifier of the second terminal apparatus and information about a frequency band supported by the second terminal apparatus, an identifier of a third terminal apparatus and information about a frequency band supported by the third terminal apparatus, delay information between the first terminal apparatus and the second terminal apparatus, or delay information between the first terminal apparatus and the third terminal apparatus, wherein the frequency band supported by the second terminal apparatus comprises the first frequency band.

50. The apparatus according to any one of claims 46 to 49, wherein the sending module is further configured to:
send first scheduling information to the first terminal apparatus, wherein the first scheduling information indicates the first terminal apparatus to send first data to the second terminal apparatus; and
send second scheduling information to the second terminal apparatus, wherein the second scheduling information indicates the second terminal apparatus to send second data to the network device on the first frequency band, the second data is determined based on the first data, and the first data is sent by the first terminal apparatus to the second terminal apparatus; and
that the receiving module is further configured to:
receive, from the first terminal apparatus, data sent in uplink data transmission performed on the first frequency band supported by the second terminal device and a second frequency band supported by the first terminal apparatus comprises:
receiving the second data from the second terminal apparatus.

51. The apparatus according to claim 50, wherein the first scheduling information comprises the identifier of the second terminal apparatus and/or an identifier of the first frequency band.

52. The apparatus according to claim 50 or 51, wherein the receiving module is further configured to:
receive third data sent by the second terminal apparatus on the first frequency band, wherein the third data is data of the second terminal apparatus, and a time domain resource of the third data is different from a time domain resource of the second data.

53. The apparatus according to any one of claims 48 to 50, wherein the first scheduling information and the second scheduling information both comprise information for identifying the first data.

54. The apparatus according to any one of claims 46 to 53, wherein the first configuration information comprises the identifier of the second terminal apparatus and/or the identifier of the first frequency band.

55. A communication apparatus, comprising a transceiver, a memory, and a processor, wherein
the transceiver is used by the apparatus to perform communication;
the memory is configured to store a computer program; and
the processor is configured to execute the computer program, to enable the communication apparatus to perform the communication method performed by the first terminal apparatus according to any one of claims 1 to 27.

56. A computer-readable storage medium, wherein the computer-readable storage medium is configured to store a computer program, and when the computer program is run on a computer, the computer is enabled to perform the method according to any one of claims 1 to 11, the method according to any one of claims 12 to 18, or the method according to any one of claims 19 to 27.

57. A computer program product, wherein when the computer program product runs on a computer, the computer is enabled to perform the method according to any one of claims 1 to 11, the method according to any one of claims 12 to 18, or the method according to any one of claims 19 to 27.

58. An apparatus, comprising a circuit, wherein the circuit is configured to perform the method according to any one of claims 1 to 27.

59. An apparatus, comprising a processor, wherein the processor is coupled to a memory, the memory stores instructions, and when the instructions are executed, the apparatus is enabled to perform the method according to any one of claims 1 to 27.

60. An apparatus, comprising a module configured to perform the method according to any one of claims 1 to 27.

61. A communication apparatus, comprising a processor and a memory, wherein the processor is coupled to the memory;
the memory stores a computer program; and
the processor is configured to execute the computer program stored in the memory, to enable the apparatus to perform the method according to any one of claims 1 to 27.

62. A chip, wherein the chip is coupled to a memory, and is configured to read and execute program instructions stored in the memory, to perform the method according to any one of claims 1 to 27.

63. A communication system, comprising an apparatus configured to perform the method according to any one of claims 1 to 11, an apparatus configured to perform the method according to any one of claims 12 to 18, and an apparatus configured to perform the method according to any one of claims 19 to 27.
